# EUROPÄISCHE PATENTSCHRIFT

(11) **EP 3 988 803 B1**
(45) Veröffentlichungstag und Bekanntmachung des Hinweises auf die Patenterteilung: **17.01.2024**
(21) Anmeldenummer: 21202208.1
(22) Anmeldetag: 12.10.2021
(51) Int. Cl.: F16B 19/08, F16B 37/06, H01R 43/00, F16B 5/02, F16B 1/00

(54) **FUNKTIONSEINHEIT MIT BEFESTIGUNGSELEMENT UND FIXIERELEMENT**
FUNCTIONAL UNIT WITH CONNECTING ELEMENT AND FIXING ELEMENT
UNITÉ FONCTIONNELLE POURVUE D'ÉLÉMENT DE CONNEXION ET D'ÉLÉMENT DE FIXATION

(30) Priorität: 20.10.2020 DE 102020127590
(43) Veröffentlichungstag der Anmeldung: 27.04.2022
(73) Patentinhaber: Profil Verbindungstechnik GmbH & Co. KG, 61381 Friedrichsdorf (DE)
(72) Erfinder: DIEHL, Oliver, 61250 Usingen (DE); HUMPERT, Richard, 61231 Bad Nauheim (DE)
(74) Vertreter: Manitz Finsterwald Patent- und Rechtsanwaltspartnerschaft mbB

(56) Entgegenhaltungen:
- WO-A1-2018/206103
- US-A- 5 207 588
- US-B2- 8 360 811
- US-B2- 9 680 239

## Beschreibung

Die vorliegende Erfindung betrifft eine Funktionseinheit zur Anbringung an einem Werkstück, insbesondere an einem Blechteil, umfassend ein Befestigungselement mit einem Befestigungsabschnitt zur drehfesten Befestigung der Funktionseinheit an dem Werkstück und mit einem sich in einer axialen Richtung an den Befestigungsabschnitt anschließenden Kopfteil, welcher einen Funktionsabschnitt und eine dem Befestigungsabschnitt abgewandte Kopfteilauflagefläche aufweist. Ferner umfasst die Funktionseinheit ein Fixierelement, das mittels einer Drehbewegung an dem Funktionsabschnitt des Kopfteils des Befestigungselements fixierbar ist und das eine Fixierelementauflagefläche aufweist, die in einem an dem Befestigungselement montierten Zustand des Fixierelements der Kopfteilauflagefläche zugewandt ist, derart, dass ein Anbauteil zwischen der Kopfteilauflagefläche und der Fixierelementauflagefläche klemmbar ist.

Derartige Funktionseinheiten sind aus dem Stand der Technik grundsätzlich bekannt und werden beispielsweise dazu eingesetzt, einen Kabelschuh an einem Werkstück durch das Befestigungselement und das Fixierelement klemmend zu befestigen. Beispielsweise dient die Funktionseinheit zur Fixierung eines Massekabels an einem Werkstück.

Das Befestigungselement kann beispielsweise als Mutterelement oder als Bolzenelement ausgebildet sein. Um zu verhindern, dass sich bei einem Festziehen des Fixierelements an dem Befestigungselement das Anbauteil, beispielsweise der Kabelschuh mitdreht, was die Montage erschwert und wodurch letztlich sogar ein daran befestigtes Kabel beschädigt werden kann, kann das Befestigungselement einen Verdrehschutz aufweisen. Beispielsweise können käfigartige Vorsprünge an dem Befestigungselement vorgesehen sein, welche ein Weitererdrehen des Kabelschuhs zumindest an den durch die Vorsprünge markierten Positionen verhindert. Alternativ kann auch die Ausbildung eines Massebolzens mit Formschlussmerkmalen am Funktionsabschnitt vorgesehen sein, wodurch ein spezieller Kabelschuh mit passender Aussparung formschlüssig aufgenommen werden kann. Der Einsatz derartiger Befestigungselemente ist jedoch nur in Kombination mit speziell dafür gefertigten Anbauteilen möglich und daher aufwändig. Zudem ist die Ausrichtung des Anbauteils nur entsprechend der durch Käfig oder Formmerkmale vorgegebenen Teilungen möglich und somit unflexibel.

Die US 5 207 588 A und die US 8 360 811 B2 offenbaren jeweils eine Funktionseinheit mit den Merkmalen des Oberbegriffs des Anspruchs 1. Beispiele für Befestigungselemente sind auch in den Druckschriften US 9 680 239 B2 und WO 2018/206103 A1 angegeben.

Es ist eine Aufgabe der vorliegenden Erfindung, ein Funktionselement zur verdrehsicheren Befestigung eines Anbauteils bereitzustellen, umfassend ein Befestigungselement und ein Fixierelement, das sich durch eine universelle Einsetzbarkeit, eine flexible Verwendung sowie eine einfache und kostengünstige Herstellung auszeichnet.

Die Aufgabe wird gelöst durch eine Funktionseinheit mit den Merkmalen des Anspruchs 1. Bevorzugt sind das Befestigungselement und/oder das Fixierelement aus Metall.

Der Erfindung liegt die allgemeine Idee zugrunde, dass eine verdrehsichere Befestigung eines Anbauteils, beispielsweise einer Kabelanschlusseinrichtung oder eines Kabelschuhs, mittels der erfindungsgemäßen Funktionseinheit erfolgt, wobei an dem Anbauteil selbst keine von einer Standardausführung abweichenden Merkmale, beispielsweise spezielle Formgebungsmerkmale, ausgebildet sein müssen, da der Verdrehschutz in das Anbauteil durch das Verdrehsicherungsmerkmal des Befestigungselements während des Befestigens eingeprägt wird. Das Anbauteil kann an dem Befestigungselement in beliebiger Orientierung bzw. Ausrichtung angebracht werden, wie es den räumlichen Anwendungsgegebenheiten am besten entspricht. Durch das Fixieren des Fixierelements an dem Befestigungselement mittels einer Drehbewegung, beispielsweise durch Festschrauben, an dem Befestigungselement, wird das Material des Anbauteils verformt, indem das zumindest eine Verdrehsicherungsmerkmal in das Anbauteil eingepresst wird und somit das Anbauteil in der gewählten Orientierung fixiert. Dies gewährleistet eine universelle Einsetzbarkeit der Funktionseinheit mit zahlreichen handelsüblichen Anbauteilen, während sie flexibel auch in räumlich beengten Einbausituationen einsetzbar ist.

Bei dem Blechteil kann es sich beispielsweise um ein Karosserieteil handeln. Bevorzugt sind das Befestigungselement und/oder das Fixierelement aus einem metallischen, elektrisch leitfähigen Material gefertigt, sodass durch die Funktionseinheit ein elektrischer Kontakt zwischen dem Werkstück und dem Anbauteil bzw. einem an dem Anbauteil befestigten Kabel herstellbar ist. Insbesondere kann die Funktionseinheit als Massebolzen oder Massemutter mit Fixierelement dienen.

Eine Längsachse des Befestigungselements erstreckt sich von dem Befestigungsabschnitt zur Befestigung des Befestigungselements an dem Werkstück zu dem Kopfteil. Typischerweise ist senkrecht zu der Längsachse eine sich in radialer Richtung erstreckende Kopfteilauflagefläche des Befestigungselements angeordnet.

In einem an dem Befestigungselement fixierten Zustand des Fixierelements erstreckt sich die Fixierelementauflagefläche vorteilhafterweise zumindest abschnittsweise parallel zu der Kopfteilauflagefläche. Das Fixierelement ist mit dem Befestigungselement verschraubbar und kann insbesondere so weit auf das Befestigungselement aufschraubbar sein, dass die Fixierelementauflagefläche und die Kopfteilauflagefläche zumindest teilweise in flächige Anlage miteinander bringbar sind. Ein zwischen der Fixierelementauflagefläche und der Kopfteilauflagefläche eingebrachtes Anbauteil kann durch so durch Festziehen des Fixierelements klemmend an der Funktionseinheit fixiert werden, wobei problemlos Anbauteile mit unterschiedliche axialer Dicke verwendbar sind.

Zur drehfesten, d.h. verdrehsicheren, Befestigung des Funktionselements in dem Bauteil können im Bereich des Befestigungsabschnitts, insbesondere auf einer Außenkontur des Befestigungsabschnitts, Verdrehsicherungsmerkmale vorgesehen sein, beispielsweise rippenförmige Erhebungen und/oder rillenartige Vertiefungen, angebracht sein. Diese können sich insbesondere in Richtung der Längsachse des Befestigungselements erstrecken. Alternativ oder zusätzlich können ähnliche Merkmale, insbesondere Erhebungen oder Vertiefungen, im Bereich des Kopfteils, insbesondere auf einer in einem montierten Zustand dem Werkstück zugewandten Werkstückanlagefläche des Kopfteils angeordnet sein.

Der Befestigungsabschnitt kann für die Verbindung mit verschiedenartigen Werkstücken ausgebildet sein, wobei insbesondere eine angepasste axiale Erstreckung des Befestigungsabschnitts für Werkstücke mit verschiedenen Dicken vorgesehen sein kann.

Vorteilhafte Ausführungen der Erfindung sind der Beschreibung, den Unteransprüchen und den Zeichnungen zu entnehmen.

Gemäß einer Ausführungsform ist die Kopfteilauflagefläche ringförmig ausgestaltet und bietet auf diese Weise eine nicht orientierungsabhängige, drehsymmetrische Auflagefläche für - in Abwesenheit eines Anbauteils - das Fixierelement bzw. das Anbauteil selbst. Insbesondere kann sich die Kopfteilauflagefläche ringförmig um den Funktionsabschnitt des Befestigungselements erstrecken und mit diesem konzentrisch angeordnet sein.

Das zumindest eine Verdrehsicherungsmerkmal kann verschieden ausgebildet sein. Beispielsweise können mehrere Verdrehsicherungsmerkmale vorgesehen sein, die in Umfangsrichtung, verteilt angeordnet sind, insbesondere mit gleichmäßigen Winkelabständen und bevorzugt mit gleichen radialen Abständen von der Längsachse der Einheit. Beispielsweise kann das zumindest eine Verdrehsicherungsmerkmal mindestens eine, insbesondere jedoch mehrere bzw. zahlreiche einzelne Spitzen oder Spikes umfassen, die aus der Kopfteilauflagefläche herausragen und welche ringförmig, insbesondere konzentrisch um den Funktionsabschnitt des Befestigungselements angeordnet sein können.

Grundsätzlich können anstelle der Spikes auch anders ausgefomte Verdrehsicherungsmerkmale ringförmig auf der Kopfteilauflagefläche angebracht sein, beispielsweise zahn- oder keilförmige Strukturen, blütenartig ausgebildete Strukturen, polygonale Strukturen, in radialer Richtung verlaufende Rippen, etc. Insbesondere sind als Verdrehsicherungsmerkmal Strukturen geeignet, die nicht rotationssymmetrisch in dem Sinne sind, dass sie durch einen beliebigen Drehwinkel zwischen 0° und 360° auf sich selbst abbildbar sind. Eine Drehsymmetrie, d.h. die Möglichkeit, das Verdrehsicherungsmerkmal durch Rotation um einen oder verschiedene diskrete Winkel in sich selbst überzuführen, ist jedoch möglich. Eine Kombination verschiedener Verdrehsicherungsmerkmale ist ebenfalls denkbar.

Das zumindest eine Verdrehsicherungsmerkmal muss nicht zwingend den Funktionsabschnitt des Befestigungselements vollumfänglich umgeben. Es kann ebenso lediglich in einem bestimmten Winkelbereich der Kopfteilauflagefläche angeordnet sein und beispielsweise als zumindest eine Stufe oder Rampe in der Kopfteilauflagefläche ausgebildet sein.

Erfindungsgemäß weist die Fixierelementauflagefläche mindestens eine Vertiefung oder Ausnehmung auf, welche dazu ausgebildet ist, in einem an dem Befestigungselement montierten Zustand des Fixierelements das zumindest eine aus der Kopfteilauflagefläche ragende Verdrehsicherungsmerkmal aufzunehmen, während die Fixierelementauflagefläche zumindest abschnittsweise mit der Kopfteilauflagefläche in Kontakt steht. Die Funktionseinheit kann dadurch auch in Abwesenheit eines Anbauteils, beispielsweise zu Transport-, Lager- oder Befestigungszwecken, als vollständige, aus Befestigungselement und Fixierelement zusammengesetzte, insbesondere verliersicher miteinander verschraubte, Einheit vorliegen. Die Vertiefung oder Ausnehmung des Fixierelements kann die Verdrehsicherungsmerkmale der Kopfteilauflagefläche schützend umgeben bis ein Anbauteil auf das Befestigungselement aufgebracht und verdrehsicher daran angebracht werden soll.

Eine radiale Breite des oder der Verdrehsicherungsmerkmale ist dabei vorzugsweise kleiner als eine radiale Breite der Kopfteilauflagefläche, sodass sich die Kopfteilauflagefläche zumindest radial innen- oder außenseitig über das zumindest eine Verdrehsicherungsmerkmal hinaus erstreckt und mit der Fixierelementauflagefläche in Anlage bringbar ist.

Erfindungsgemäß umfasst die Vertiefung oder Ausnehmung der Fixierelementauflagefläche mindestens eine ringförmige umlaufende Nut. Derartige Ausnehmungen sind besonders einfach herstellbar und universell einsetzbar, um sogar verschiedenartig ausgebildete Verdrehsicherungsmerkmale aufzunehmen. Die zumindest eine ringförmig umlaufende Nut kann konzentrisch mit dem zumindest einen Verdrehsicherungsmerkmal und insbesondere mit der Längsachse des Fixierelements angeordnet sein und in radialer Richtung - komplementär zu dem zumindest einen Verdrehsicherungsmerkmal - an zumindest einer geeigneten Position der Fixierelementauflagefläche angeordnet sein, z.B. radial innenseitig, radial außenseitig und/oder dazwischen.

Das zumindest eine aus der Kopfteilauflagefläche ragende Verdrehsicherungsmerkmal kann den Funktionsabschnitt radial außenseitig umgeben, und insbesondere direkt angrenzend an den Funktionsabschnitt ausgebildet sein. Diese Anordnung kann fertigungstechnisch vorteilhaft sein, wobei sich insbesondere auch Vorteile bei der Herstellung des korrespondierenden Fixierelements ergeben können, insbesondere wenn das Verdrehsicherungsmerkmal direkt an den Funktionsabschnitt angrenzt.

Zur einfachen Befestigung in dem Werkstück kann der Befestigungsabschnitt einen, insbesondere zylindrischen, umformbaren Nietabschnitt umfassen. Dieser kann dazu vorgesehen sein, in ein vorgefertigtes Loch in dem Werkstück eingesetzt zu werden und derart umgeformt zu werden, dass eine auszugssichere Befestigung des Befestigungselements entsteht. Alternativ kann das Befestigungselement auch einen Abschnitt zum stoffschlüssigen Verbinden mit dem Werkstück, beispielsweise einen Schweißabschnitt, aufweisen.

Gemäß einer Ausführungsform ist das Befestigungselement ein Bolzenelement, dessen Funktionsabschnitt einen sich in axialer Richtung seitens der Kopfteilauflagefläche anschließenden Schaftteil umfasst. Der Schaftteil erstreckt sich bevorzugt in axialer Richtung - auf der dem Befestigungsabschnitt abgewandten Seite des Befestigungselements - über die Kopfteilauflagefläche hinaus und ist zur Aufnahme eines Anbauteils und des Fixierelements ausgebildet.

Bevorzugt weist der Schaftteil ein Außengewinde auf. Das Außengewinde muss sich nicht zwingend über die gesamte Länge des Schaftteils erstrecken, sondern kann beispielsweise in axialer Richtung von der Kopfteilauflagefläche beabstandet angeordnet sein, insbesondere um den Abstand einer axialen Erstreckung eines typischen Anbauteils. Ein Durchmesser des Schaftteils ist typischerweise kleiner als der Durchmesser der Kopfteilauflagefläche. Bevorzugt erstreckt sich der Schaftteil in radialer Richtung zudem weniger weit zu einer Außenseite des Befestigungselements hin als das zumindest eine Verdrehsicherungsmerkmal.

Alternativ kann das Befestigungselement ein Mutterelement sein, dessen Funktionsabschnitt ein in dem Kopfteil angeordnetes Innengewinde umfasst, insbesondere wobei sich das Innengewinde in axialer Richtung von der Kopfteilauflagefläche in Richtung des Befestigungsabschnitts erstreckt. Ein korrespondierendes Fixierelement kann als Fixierschraube ausgebildet sein, die mittels eines zu dem Innengewinde komplementären Außengewindes in das Mutterelement einschraubbar ist. Das Anbauteil kann auf die Kopfteilauflagefläche aufgelegt werden und mittels der Fixierschraube an dem Mutterelement befestigt werden.

Insbesondere, wenn das Befestigungselement als Bolzenelement ausgebildet ist, kann das Fixierelement als Fixiermutter ausgebildet sein, welche eine axiale, insbesondere zentral angeordnete, Durchgangsöffnung aufweist, die sich von einer sich radial erstreckenden ersten Stirnfläche zu der sich radial erstreckenden Fixierelementauflagefläche erstreckt und welche ein Innengewinde aufweist. Das Innengewinde kann komplementär zu einem Außengewinde eines Schaftteils eines korrespondieren Bolzenelements ausgebildet sein. Zudem kann die Fixiermutter einen sich radial erstreckenden Flansch aufweisen, insbesondere wobei die Fixierelementauflagefläche an dem Flansch angeordnet ist.

Die Fixiermutter kann seitens der ersten Stirnfläche eine Angriffsfläche für ein Schraubwerkzeug aufweisen, und der Flansch kann eine, insbesondere ringförmige, Fläche für einen Stempel eines Setzkopfes aufweisen. Die Angriffsfläche für das Schraubwerkzeug kann beispielsweise eine polygonale, insbesondere sechsseitige Außenkontur der Fixiermutter umfassen. Die ringförmige Fläche kann flanschseitig radial über die Angriffsfläche für das Schraubwerkzeug herausstehen, um für den Stempel des Setzkopfes zugänglich zu sein. Insbesondere kann die ringförmige Fläche des Flansches einen größeren Durchmesser aufweisen als die Kopfteilauflagefläche des Bolzenelements.

Um das Befestigungselement ohne aufwändiges Vorbohren oder Vorfertigen eines Lochs in das Werkstück einbringen zu können, kann das Befestigungselement einen selbststanzenden Befestigungsabschnitt aufweisen, welcher das Werkstück beim Setzen selbst durchschneidet. Der selbststanzende Befestigungsabschnitt kann von einer zylindrischen Form abweichen und beispielsweise polygonal ausgebildet sein, um eine drehfeste Verbindung mit dem Werkstück herzustellen.

Ein weiterer Aspekt der Erfindung betrifft ein Zusammenbauteil, umfassend eine Funktionseinheit wie vorstehend beschrieben und ein Werkstück, wobei das Befestigungselement der Funktionseinheit an dem Werkstück formschlüssig durch ein Umformverfahren angebracht ist. Der Befestigungsabschnitt des Befestigungselements hat das Werkstück typischerweise durchdrungen und kann vorteilhafterweise auf einer dem Kopfabschnitt abgewandten Seite des Befestigungsabschnitts derart radial aufgeweitet oder umgebördelt sein, dass er das Werkstück hintergreift und somit für eine auszugsichere Verbindung sorgt.

Das Zusammenbauteil kann zudem ein Anbauteil, insbesondere eine Kabelanschlusseinrichtung oder einen Kabelschuh, umfassen, wobei das Anbauteil zwischen der Kopfteilauflagefläche des Befestigungselements und der Fixierelementauflagefläche des Fixierelements geklemmt ist. Das Anbauteil steht insbesondere mit dem zumindest einen Verdrehsicherungsmerkmal der Kopfteilauflagefläche in Eingriff und ist durch dieses drehfest fixiert. Vorzugsweise hat sich das zumindest eine Verdrehsicherungsmerkmal in das Material des Anbauteils eingegraben und auf diese Weise eine formschlüssige Verbindung mit dem Anbauteil hergestellt. Das zumindest eine Verdrehsicherungsmerkmale wurde also auf das Anbauteil nach dem Anbringen übertragen, insbesondere während des Befestigens des Fixierelements durch eine Drehbewegung.

Besonders zuverlässig wird das Verdrehsicherungsmerkmal in das Material des Anbauteils eingeprägt und die Verdrehsicherung bewirkt, wenn das Material des zumindest einen Verdrehsicherungsmerkmals, insbesondere des Kopfteils, des Befestigungselements und/oder des Fixierelements, eine höhere Festigkeit aufweist, als das des Anbauteils.

Ein weiterer Aspekt der Erfindung betrifft ein Verfahren zur Herstellung eines Zusammenbauteils gemäß einer vorstehenden Ausführungsform, bei dem (i) ein Befestigungselement einer Funktionseinheit gemäß einer vorstehend beschriebenen Ausführungsform mit Hilfe eines Stempels einer Setzvorrichtung in ein Werkstück eingepresst oder eingestanzt wird. Gemäß einer erfindungsgemäßen Ausführungsform des Verfahrens erfolgt das Einpressen oder Einstanzen des Befestigungselements (ii) während das Fixierelement der Funktionseinheit demontiert ist, wobei der Stempel eine Kontaktfläche aufweist, die (iii) zur Übertragung einer Einpresskraft auf das Befestigungselement zumindest abschnittsweise mit der Kopfteilauflagefläche des Befestigungselements in Eingriff gebracht wird, wobei (iv) die Kontaktfläche des Stempels mindestens eine Vertiefung oder Ausnehmung, insbesondere mit einer Drehsymmetrie oder Rotationssymmetrie, aufweist, in welcher das zumindest eine aus der Kopfteilauflagefläche ragende Verdrehsicherungsmerkmal während des Einpressens oder Einstanzens aufgenommen wird. Eine Beschädigung des zumindest einen Verdrehsicherungsmerkmals während des Einpressens des Befestigungselements kann auf diese Weise verhindert werden.

Gemäß einer weiteren erfindungsgemäßen Ausführungsform ist ein Verfahren zur Herstellung eines Zusammenbauteils gemäß einer vorstehend beschriebenen Ausführungsform vorgesehen, bei dem (i) ein Befestigungselement einer Funktionseinheit, jedoch ohne Verdrehsicherungmerkmal auf der Kopfteilauflagefläche, mit Hilfe eines Stempels einer Setzvorrichtung in ein Werkstück eingepresst wird.

Das Befestigungselement der Funktionseinheit umfasst einen Befestigungsabschnitt zur drehfesten Befestigung der Funktionseinheit an dem Werkstück und einen sich in einer axialen Richtung an den Befestigungsabschnitt anschließenden Kopfteil, welcher einen Funktionsabschnitt und eine dem Befestigungsabschnitt abgewandte Kopfteilauflagefläche aufweist. Zudem umfasst die Funktionseinheit ein Fixierelement, das mittels einer Drehbewegung an dem Funktionsabschnitt des Kopfteils des Befestigungselements fixierbar ist und das eine Fixierelementauflagefläche aufweist, die in einem an dem Befestigungselement montierten Zustand des Fixierelements der Kopfteilauflagefläche zugewandt ist, derart, dass ein Anbauteil zwischen der Kopfteilauflagefläche und der Fixierelementauflagefläche klemmbar ist. Das Verfahren gemäß dieser Ausführungsform wird durchgeführt, (ii) während das Fixierelement der Funktionseinheit demontiert ist, wobei der Stempel eine Kontaktfläche aufweist, die (iii) zur Übertragung einer Einpresskraft auf das Befestigungselement mit der Kopfteilauflagefläche des Befestigungselements in Eingriff gebracht wird, wobei (iv) die Kontaktfläche des Stempels Ausnehmungen aufweist, welche als Negativform für zumindest ein Verdrehsicherungsmerkmal dienen, und in welche während des Anpressens der Kontaktfläche an die Kopfteilauflagefläche Material der Kopfteilauflagefläche einfließt, sodass während des Einpressens zumindest ein Verdrehsicherungsmerkmal auf der Kopfteilauflagefläche des Befestigungselements ausgebildet wird.

Gemäß diesem Verfahren wird erst während des Einpressens des Befestigungselements in das Werkstück das zumindest eine Verdrehsicherungsmerkmal der Kopfteilauflagefläche ausgebildet. Auf diese Weise kann einerseits sichergestellt werden, dass das Verdrehsicherungsmerkmal intakt und nicht beschädigt ist, wenn direkt im Anschluss das Anbauteil angebracht wird. Andererseits ist eine besonders flexible Verwendung standardisierter Befestigungselemente möglich, um eine wirksame Verdrehsicherung auszubilden.

Gemäß einer weiteren Ausführungsform ist ein Verfahren zur Herstellung eines Zusammenbauteils gemäß einer vorstehend beschriebenen Ausführungsform vorgesehen, bei dem (i) ein Befestigungselement einer Funktionseinheit nach zumindest einer vorstehend beschriebenen Ausführungsform mit Hilfe eines Stempels einer Setzvorrichtung in ein Werkstück eingepresst wird, (ii) während das Fixierelement der Funktionseinheit an dem Befestigungselement derart montiert ist, dass das zumindest eine aus der Kopfteilauflagefläche ragende Verdrehsicherungsmerkmal in der mindestens einen Vertiefung oder Ausnehmung der Fixierelementauflagefläche aufgenommen ist, (iii) während die Fixierelementauflagefläche zumindest abschnittsweise mit der Kopfteilauflagefläche in Kontakt steht, wobei (iv) der Stempel eine Kontaktfläche aufweist, die zur indirekten Übertragung einer Einpresskraft oder Einstanzkraft auf das Befestigungselement zumindest abschnittsweise mit dem Fixierelement, insbesondere einem Flansch des Fixierelements in Eingriff gebracht wird. Die Funktionseinheit kann somit als Ganzes, d.h. umfassend das Befestigungselement und das zugehörige Fixierelement in das Werkstück eingebracht werden. Durch das Fixierelement ist das zumindest eine Verdrehsicherungsmerkmal des Befestigungselements während den Einpressens oder Einstanzens der Funktionseinheit in das Werkstück vor Beschädigungen geschützt. Ein separates Vorhalten eines Fixierelements ist nicht nötig, was die Handhabung und Anbringung der Funktionseinheit und nachfolgend des Anbauteils vereinfacht.

Nachfolgend wird die Erfindung anhand von Ausführungsbeispielen unter Bezugnahme auf die Figuren näher erläutert. Es zeigen:
- Fig. 1A: eine perspektivische Darstellung einer Funktionseinheit mit einem Befestigungselement und einem Fixierelement mit einer blütenförmigen Verdrehsicherung;
- Fig. 1B: eine um 180° gedrehte perspektivische Darstellung der Funktionseinheit gemäß Fig. 1A;
- Fig. 1C: eine Querschnittsansicht der zusammengesetzten Funktionseinheit gemäß Fig. 1A;
- Fig. 1D: eine Detailansicht des Querschnitts der Kopfteilauflagefläche gemäß Fig. 1A;
- Fig. 1E: eine Querschnittsansicht eines Zusammenbauteils umfassend ein Werkstück und die zusammengesetzte Funktionseinheit gemäß Fig. 1A;
- Fig. 1F: eine perspektivische Ansicht des Zusammenbauteils gemäß Fig. 1E mit einem daran befestigten Anbauteil;
- Fig. 1G: eine perspektivische Ansicht des Zusammenbauteils gemäß Fig. 1F in wieder zerlegtem Zustand;
- Fig. 2A: eine perspektivische Darstellung einer Funktionseinheit mit einem Befestigungselement und einem Fixierelement mit einer Sechskant-Verdrehsicherung;
- Fig. 2B: eine um 180° gedrehte perspektivische Darstellung der Funktionseinheit gemäß Fig. 2A;
- Fig. 2C: eine Querschnittsansicht der zusammengesetzten Funktionseinheit gemäß Fig. 2A;
- Fig. 2D: eine Querschnittsansicht eines Zusammenbauteils umfassend ein Werkstück und die zusammengesetzte Funktionseinheit gemäß Fig. 2A;
- Fig. 2E: eine perspektivische Ansicht des Zusammenbauteils gemäß Fig. 2D mit einem daran befestigten Anbauteil;
- Fig. 2F: eine perspektivische Ansicht des Zusammenbauteils gemäß Fig. 2E in wieder zerlegtem Zustand;
- Fig. 3A: eine perspektivische Darstellung einer Funktionseinheit mit einem Befestigungselement und einem Fixierelement mit einer Spikes-Verdrehsicherung;
- Fig. 3B: eine um 180° gedrehte perspektivische Darstellung der Funktionseinheit gemäß Fig. 3A;
- Fig. 3C: eine Querschnittsansicht der zusammengesetzten Funktionseinheit gemäß Fig. 3A;
- Fig. 3D: eine Detailansicht des Querschnitts der Kopfteilauflagefläche gemäß Fig. 3A;
- Fig. 3E: eine Querschnittsansicht eines Zusammenbauteils umfassend ein Werkstück und die zusammengesetzte Funktionseinheit gemäß Fig. 3A;
- Fig. 3F: eine perspektivische Ansicht des Zusammenbauteils gemäß Fig. 3E mit einem daran befestigten Anbauteil;
- Fig. 3G: eine perspektivische Ansicht des Zusammenbauteils gemäß Fig. 3F in wieder zerlegtem Zustand;
- Fig. 4A: eine perspektivische Darstellung einer Funktionseinheit mit einem Befestigungselement und einem Fixierelement mit einer Keil-Verdrehsicherung;
- Fig. 4B: eine um 180° gedrehte perspektivische Darstellung der Funktionseinheit gemäß Fig. 4A;
- Fig. 4C: eine Querschnittsansicht der zusammengesetzten Funktionseinheit gemäß Fig. 4A;
- Fig. 4D: eine Detailansicht des Querschnitts der Kopfteilauflagefläche gemäß Fig. 4A;
- Fig. 4E: eine Querschnittsansicht eines Zusammenbauteils umfassend ein Werkstück und die zusammengesetzte Funktionseinheit gemäß Fig. 4A;
- Fig. 4F: eine perspektivische Ansicht des Zusammenbauteils gemäß Fig. 4E mit einem daran befestigten Anbauteil;
- Fig. 4G: eine perspektivische Ansicht des Zusammenbauteils gemäß Fig. 4F in wieder zerlegtem Zustand;
- Fig. 5A: eine perspektivische Darstellung einer Funktionseinheit mit einem Mutterelement als Befestigungselement mit einer Spikes-Verdrehsicherung und einem Fixierelement;
- Fig. 5B: eine um 180° gedrehte perspektivische Darstellung der Funktionseinheit gemäß Fig. 5A;
- Fig. 5C: eine Draufsicht auf eine Werkzeuganlagefläche des Mutterelements gemäß Fig. 5A;
- Fig. 5D: eine Querschnittsansicht der zusammengesetzten Funktionseinheit gemäß Fig. 5A;
- Fig. 5E: eine Querschnittsansicht eines Zusammenbauteils umfassend ein Werkstück und die zusammengesetzte Funktionseinheit gemäß Fig. 5A;
- Fig. 5F: eine perspektivische Ansicht des Zusammenbauteils gemäß Fig. 5E mit einem daran befestigten Anbauteil;
- Fig. 5G: eine perspektivische Ansicht des Zusammenbauteils gemäß Fig. 5F in wieder zerlegtem Zustand;

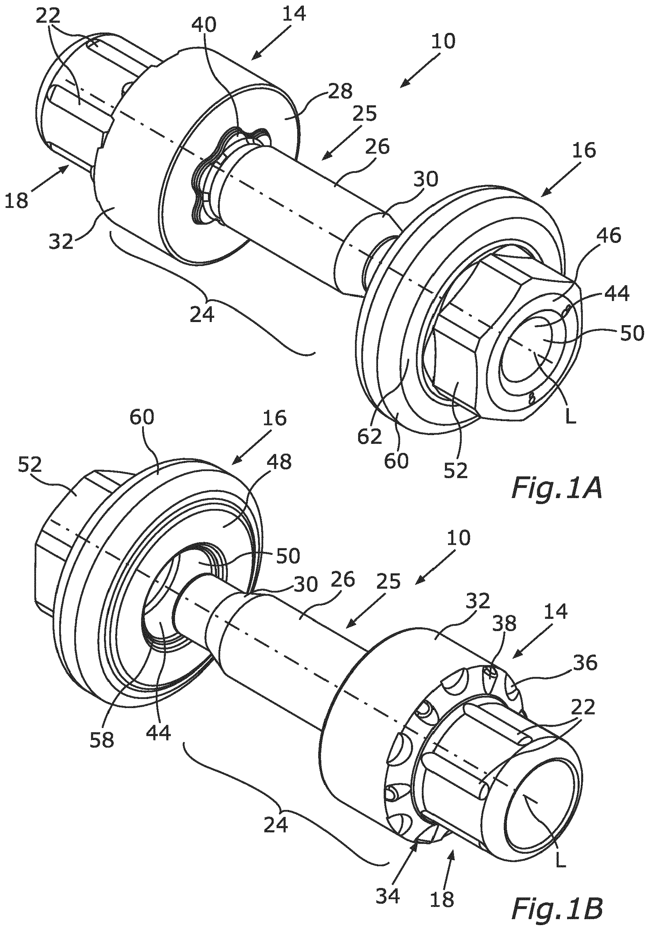

In Fig. 1A bis 1D ist eine Funktionseinheit 10 zur Anbringung an einem Werkstück 12 gezeigt, sowie in 1E bis G ein Zusammenbauteil, bei dem die Funktionseinheit 10 an dem Werkstück 12 angebracht ist. Bei dem Werkstück 12 handelt es sich um ein Blechteil, beispielsweise um ein Karosseriebauteil eines Fahrzeugs. Die Funktionseinheit 10 umfasst ein Befestigungselement 14 einerseits und ein Fixierelement 16 andererseits, wobei das Befestigungselement 14 und das Fixierelement 16 jeweils aus einem Metall ausgebildet sind.

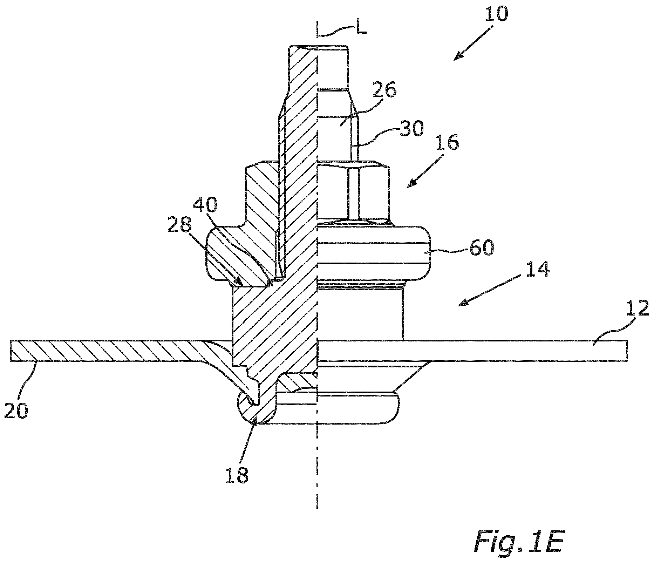

Das Befestigungselement 14 ist zur drehfesten Befestigung an dem Werkstück 12 vorgesehen und weist zu diesem Zweck einen Befestigungsabschnitt 18 auf. Der Befestigungsabschnitt 18 ist als zylinderförmiger, hohler, umformbarer Nietabschnitt ausgebildet, welcher durch ein Loch in dem Werkstück 12 geführt wird oder dieses ausstanzt (selbststanzendes Befestigungselement) und welcher auf einer Unterseite 20 des Werkstücks 12 umgebördelt wird, um das Befestigungselement 14 an dem Werkstück 12 anzubringen (Fig. 1E, die Angabe "unten" bzw. "Unterseite" ist lediglich mit Bezug zu der Orientierung des Zusammenbauteils in der Zeichnung zu verstehen, während grundsätzlich die Ausrichtung des Befestigungselements 14 und des Werkstücks 12 beliebig sein kann). Der Nietabschnitt 18 hintergreift in dem resultierenden Zusammenbauteil (Fig. 1E) die Unterseite 20 des Werkstücks 12 und ist auf diese Weise formschlüssig und auszugsicher daran befestigt.

Der Befestigungsabschnitt 18 weist in dem gezeigten Ausführungsbeispiels mehrere rippenförmige Erhebungen 22 auf, die auf einer Außenkontur des Befestigungsabschnitts 18 in Umfangsrichtung verteilt angeordnet sind und sich entlang seiner Längsachse L, welche mit der Längsachse L des Befestigungselements 24 und der gesamten Funktionseinheit 10 zusammenfällt, erstrecken. Die rippenförmigen Erhebungen 22 wirken in dem Zusammenbauteil aus Fig. 1E bis 1G mit dem Blechmaterial des Werkstücks 12 zusammen, um das Befestigungselement 18 in dem Werkstück 12 drehfest zu verankern.

Entlang der Längsachse L des Befestigungselements 14 schließt sich an den Befestigungsabschnitt 18 in axialer Richtung ein Kopfteil 24 an. Um die Drehfestigkeit des Befestigungselements 14 in dem Werkstück 12 zusätzlich zu verbessern, weist der Kopfteil 24 an seiner dem Befestigungsabschnitt 18 zugewandten Werkstückanlagefläche 34 zusätzliche Verdrehsicherungsmerkmale in Form von Erhebungen 36 und Vertiefungen 38 auf (Fig. 1B), die sich in das Material des Werkstücks 12 eingraben oder in die bei der Befestigung des Befestigungselements 14 Material des Werkstücks 12 einfließt.

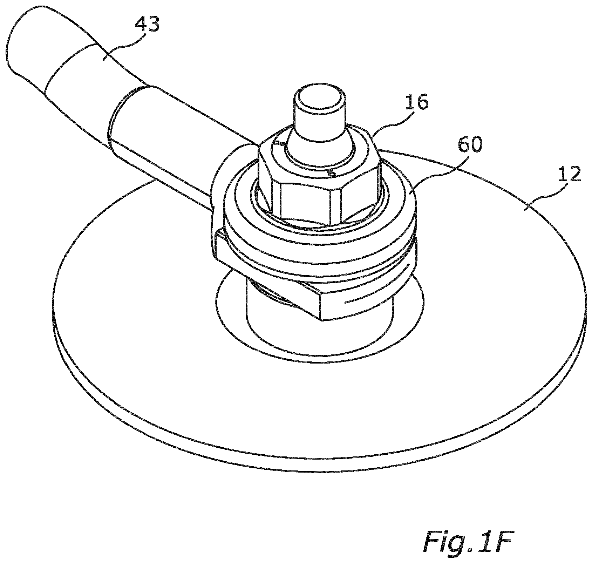

Der Kopfteil 24 umfasst einen Funktionsabschnitt 26, welcher im vorliegenden Ausführungsbeispiel als Schaftteil 25 ausgebildet ist, sodass es sich bei dem Befestigungselement 14 der Fig. 1A bis 1G um ein Bolzenelement handelt. Der Funktionsabschnitt 26 ist dazu vorgesehen, ein Anbauteil 42 sowie ein Fixierelement 16 aufzunehmen (Fig. 1F). Der Schaftteil 25 erstreckt sich ausgehend von einer Kopfteilauflagefläche 28 des Kopfteils 24 in axialer Richtung und ist mit einem Außengewinde 30 versehen.

Die Kopfteilauflagefläche 28 erstreckt sich in radialer Richtung senkrecht zu der Längsachse L des Befestigungselements 14 an einer dem Befestigungsabschnitt 18 abgewandten Seite des Kopfteils 24. Im Wesentlichen ist die Kopfteilauflagefläche 28 ringförmig ausgestaltet und konzentrisch mit dem Funktionsabschnitt 26 angeordnet. In radialer Richtung erstreckt sich die Kopfteilauflagefläche 28 um den Schaftteil 25 herum bis zu einer außenseitig angeordneten zylindermantelförmigen Außenkontur 32 des Kopfteils 24.

Neben dem Befestigungselement 14 umfasst die Funktionseinheit 10 ein Fixierelement 16, das mittels einer Drehbewegung an dem Funktionsabschnitt 26 des Befestigungselements 14 fixierbar ist. Bei dem Fixierelement 16 handelt es sich um eine Fixiermutter mit einer axialen Durchgangsöffnung 44, welche sich von einer sich radial erstreckenden ersten Stirnfläche 46 zu einer sich ebenfalls radial erstreckenden Fixierelementauflagefläche 48 erstreckt.

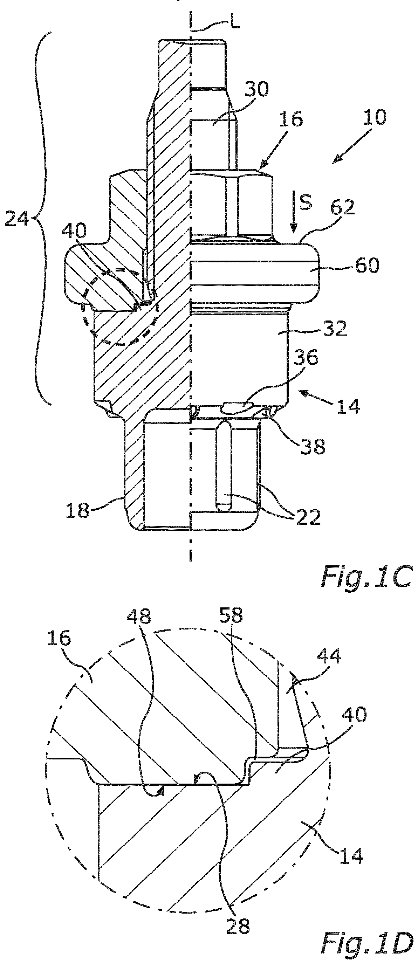

In der axialen Durchgangsöffnung 44 der Fixiermutter ist ein Innengewinde 50 angeordnet, das komplementär zu dem Außengewinde 30 des Schaftabschnitts 25 ausgebildet ist, sodass die Fixiermutter auf den Funktionsabschnitt 26 des Befestigungselements 14 aufschraubbar ist (siehe Fig. 1C). In einem an dem Befestigungselement 14 montierten Zustand ist die Fixiermutter 16 derart ausgerichtet, dass die Kopfteilauflagefläche 28 und die Fixierelementauflagefläche 48 einander zugewandt und zueinander parallel ausgerichtet sind, sodass sie miteinander in Anlage gebracht werden können (Fig. 1D).

Zum Festschrauben an dem Funktionsabschnitt 26 (und zum Lösen) weist die Fixiermutter 16 seitens der ersten Stirnfläche 46 eine sechskantförmige Außenkontur 52 auf, die als Angriffsfläche für ein Schraubwerkzeug dient. Durch Aufschrauben der Fixiermutter 16 auf den Funktionsabschnitt 26 des Befestigungselements 14 und Festziehen der Fixiermutter 16 können die Fixierelementauflagefläche 48 und die Kopfteilauflagefläche 28 derart aneinander angepresst werden, dass auf diese Weise auch ein Anbauteil durch Einklemmen an der Funktionseinheit 10 befestigt werden kann, beispielsweise ein Kabelschuh 42 (Fig. 1F).

Damit der Kabelschuh 42 an der in dem Werkstück befestigten Funktionseinheit 10 befestigt werden kann, ohne dass er sich beim Festziehen der Fixiermutter 16 mitdreht und auf diese Weise die Gefahr besteht, dass das Kabel 43 beschädigt wird, weist die Kopfteilauflagefläche 28 ein aus der Fläche herausragendes Verdrehsicherungsmerkmal 40 auf, welches im gezeigten Ausführungsbeispiel blütenförmig ausgebildet ist. Das Verdrehsicherungsmerkmal grenzt direkt radial außenseitig an den Funktionsabschnitt 26 an und erstreckt sich vollumfänglich in Umfangsrichtung um diesen herum. Das Verdrehsicherungsmerkmal 40 ist dazu ausgebildet, sich in das Material eines mit der Funktionseinheit 10 zu verbindenden Anbauteils, beispielsweise in das Material des Kabelschuhs 42, einzugraben, sodass dieser relativ zu dem Befestigungselement 14 der Funktionseinheit 10 verdrehsicher fixiert wird.

Um den Kabelschuh 42, welcher keine besonderen Eigenschaften oder Formmerkmale aufweist, mittels der Funktionseinheit 10 an dem Werkstück 12 zu befestigen, wird ausgehend von dem Zusammenbauteil gemäß Fig. 1E zunächst die Fixiermutter 16 von dem Schaftteil 25 des Bolzenelements 14 entfernt und der Kabelschuh 42 mittels der Öffnung 54 auf den Funktionsabschnitt 26 des Befestigungselements 14 aufgesteckt. Anschließend wird die Fixiermutter 16 wieder auf das Außengewinde 30 des Schaftabschnitts 25 aufgeschraubt und mittels eines Schraubwerkzeugs und der sechskantförmigen Angriffsfläche 52 festgezogen.

Dabei drückt die Fixiermutter 16 mittels der Fixierelementanlagefläche 48 den Kabelschuh 42 zunehmend in Richtung Kopfteilanlagefläche 28 und gegen das Verdrehsicherungsmerkmal 40. Das Material des Kopfteils 24, des Verdrehsicherungsmerkmals 40 und des Fixierelements 16 kann so gewählt sein, dass es eine höhere Festigkeit aufweist als das Material des Kabelschuhs 42. Somit wird der Kabelschuh 42 beim Festschrauben der Fixiermutter 16 einerseits zwischen der Kopfteilauflagefläche 28 des Befestigungselements 14 und der Fixierelementauflagefläche 48 des Fixierelements eingeklemmt. Zudem gräbt sich das Verdrehsicherungsmerkmal 40 in das Material des Kabelschuhs 42 ein, sodass dieser drehfest durch das Verdrehsicherungsmerkmal 40 an der Funktionseinheit fixiert wird (Fig. 1F).

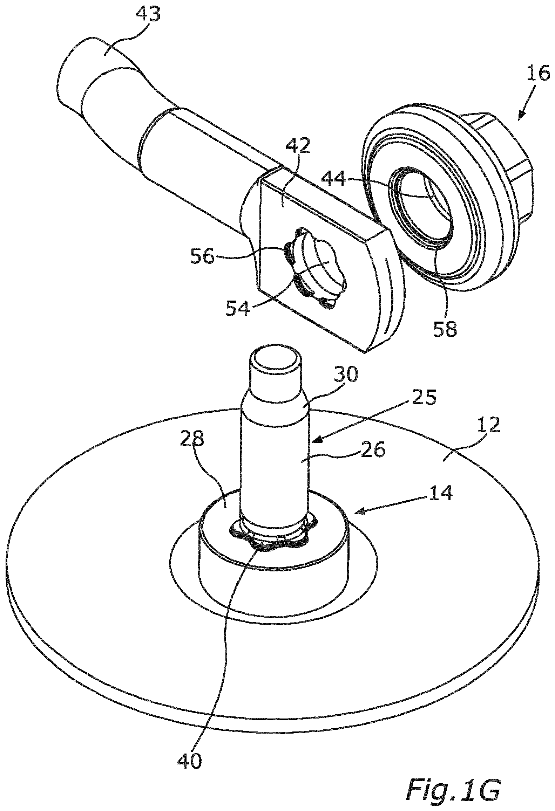

Löst man die Anordnung nach dem erstmaligen Zusammenschrauben wieder (Fig. 1G), so hat sich die Formgebung des Verdrehsicherungsmerkmals 40 wie ein Stempel als Negativ 56 in den Kabelschuh 42 eingeprägt. An dieser Stelle ist nochmals zu betonen, dass der Kabelschuh 42 vor der erstmaligen Befestigung an dem Werkstück 12 mittels der Funktionseinheit 10 keine besonderen Formgebungsmerkmale aufweist, insbesondere nicht die Negativform 56 des Verdrehsicherungsmerkmals 40.

Um das Befestigungselement 14 an dem Werkstück 12 zu befestigen, kommt eine Setzeinrichtung mit einem Stempel und einer Matrize zum Einsatz (nicht gezeigt), welche das Befestigungselement 14 in das Werkstück einpresst und den Befestigungsabschnitt 18 umbördelt, um eine formschlüssige Verbindung von Befestigungselement 14 und Werkstück 12 herzustellen. Damit bei dem Setzvorgang und bei dem Umformprozess das Verdrehsicherungsmerkmal 40 nicht beschädigt, abgestumpft oder plattgedrückt wird, ist das Fixierelement so ausgestaltet, dass es als Schutz für das Verdrehsicherungsmerkmal beim Einsetzen in das Werkstück 12 dient.

Die Fixierelementauflagefläche 48 weist zu diesem Zweck eine rotationssymmetrische Vertiefung bzw. Ausnehmung 58 auf, die dazu vorgesehen ist, das aus der Kopfteilauflagefläche 28 ragende Verdrehsicherungsmerkmal 40 aufzunehmen, wenn das Fixierelement 16 an dem Befestigungselement 14 montiert ist. Zugleich steht die Fixierelementauflagefläche 48 zumindest abschnittsweise mit der Kopfteilauflagefläche 28 in Kontakt und dient gewissermaßen als Abstandshalter, damit das Verdrehsicherungsmerkmal 40 nicht durch weiteres Zuschrauben bzw. Zusammenpressen von Fixierelementauflagefläche 48 und Kopfteilauflagefläche 28 zerdrückt werden kann. Dies ist am besten in den Fig. 1C und 1D zu erkennen. Für das blütenförmige Verdrehsicherungsmerkmal 40 aus Fig. 1A bis 1G ist die Ausnehmung 58 radial innenseitig in der axialen Durchgangsöffnung 44 der Fixiermutter 16 angeordnet, korrespondierend mit der Position des Verdrehsicherungsmerkmals 40.

Zur Befestigung der Funktionseinheit 10 an dem Werkstück mittels einer Setzeinrichtung kann vorgesehen sein, dass die zusammengesetzte Funktionseinheit 10 (wie in Fig. 1C gezeigt) als Ganzes in das Werkstück eingesetzt wird. Die Fixiermutter 16 weist zu diesem Zweck einen sich radial erstreckenden Flansch 60 auf, an dem auch die Fixierelementauflagefläche 48 angeordnet ist. Auf der der Fixierelementauflagefläche 48 abgewandten Seite weist der Flansch 60 eine ringförmige Fläche 62 auf, die gerade dazu vorgesehen ist, als Kontaktfläche für einen Stempel eines Setzkopfes zum Einpressen in das Werkstück 12 zu dienen (Pfeil S, Fig. 1C). Somit kann das Befestigungselement 14 indirekt über das Fixierelement 16, konkret über die Fläche 62, mit einer Einpresskraft durch den Stempel S beaufschlagt werden, wobei das Verdrehsicherungsmerkmal 40 vor dem Zerdrücken geschützt bleibt.

Alternativ kann das Befestigungselement 14 auch bei demontiertem Fixierelement 16 in das Werkstück 12 eingepresst werden. Hierzu kann vorgesehen sein, dass der Stempel selbst eine Ausnehmung 58 besitzt, die das Verdrehsicherungsmerkmal 40 aufnimmt und auf diese Weise vor der Beschädigung während des Einstanzens oder Einpressens schützt (nicht gezeigt).

Ferner ist ebenfalls denkbar, dass das Befestigungselement 14 bei demontiertem Fixierelement 16 in das Werkstück eingebracht wird, wobei das Befestigungselement 14 vor dem Setzvorgang noch kein Verdrehsicherungsmerkmal auf der Kopfteilauflagefläche 28 aufweist. Vielmehr kann der Stempel selbst, konkret eine Kontaktfläche des Stempels mit der Kopfteilauflagefläche 28, eine Negativform des gewünschten Verdrehsicherungsmerkmals 40 tragen, sodass beim Einbringen des Befestigungselements 14 in das Werkstück 12 simultan durch den Stempel das Verdrehsicherungsmerkmal 40 auf der Kopfteilauflagefläche 28 ausgebildet wird.

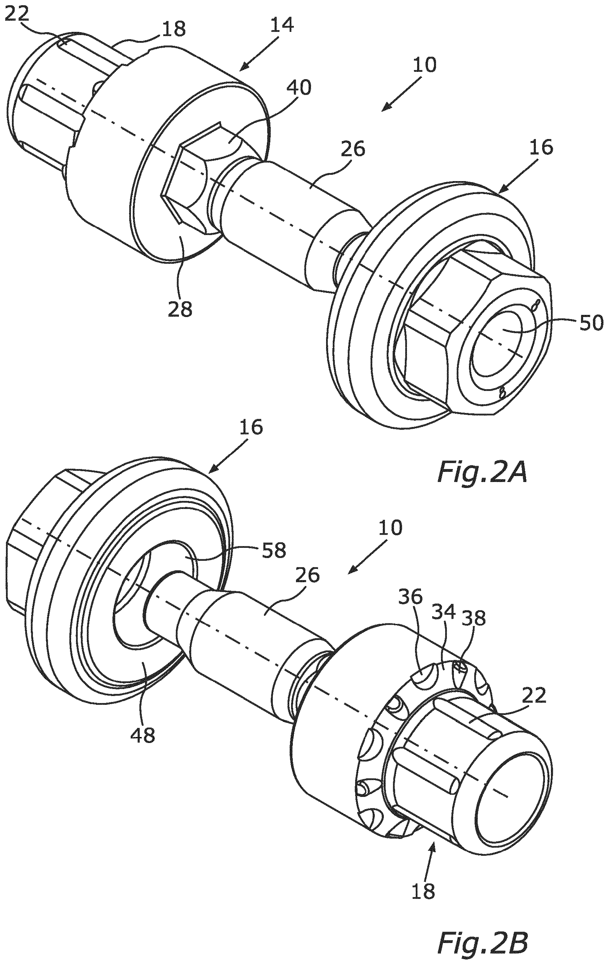

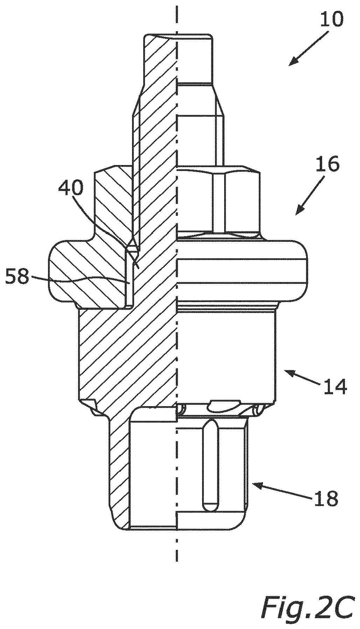

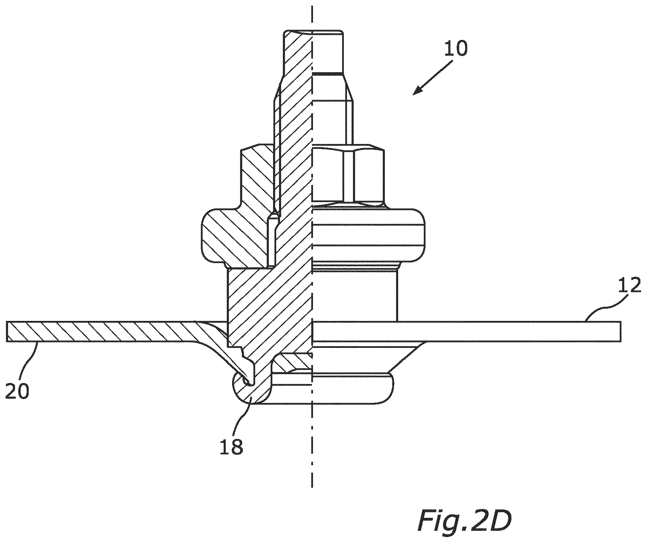

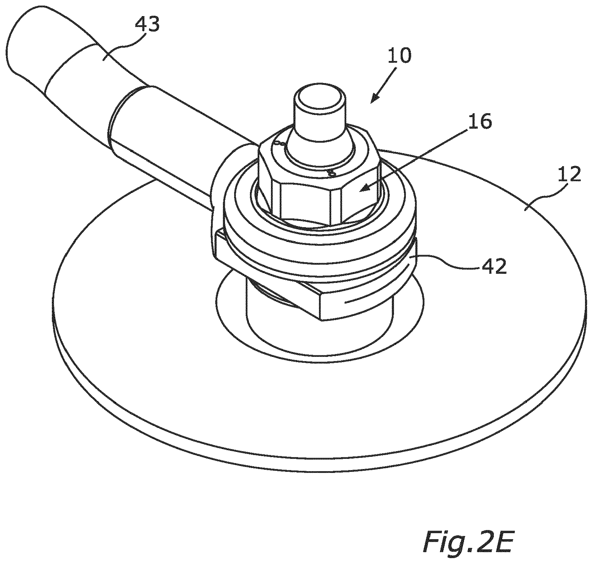

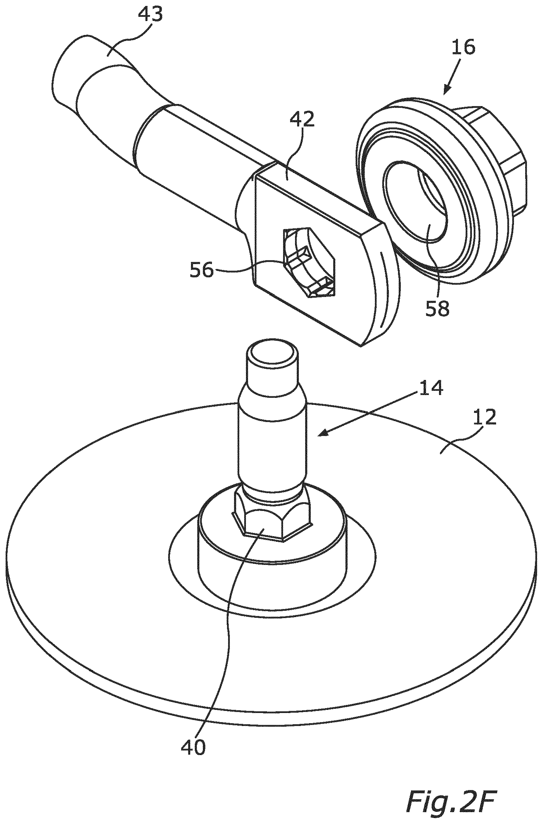

Fig. 2A bis 2E zeigen eine weitere Funktionseinheit 10 zur Anbringung an einem Werkstück 12 und ein entsprechendes Zusammenbauteil. Die Ausführungsform entspricht in den meisten Bestandteilen der Funktionseinheit 10 aus den Fig. 1A bis 1G. Lediglich das Verdrehsicherungsmerkmal 40 weist eine andere Ausgestaltung auf. Gemäß Fig. 2A bis 2E ist das Verdrehsicherungsmerkmal 40 ebenfalls radial außenseitig um den Funktionsabschnitt 26 angeordnet. Die Formgebung entspricht gemäß Fig. 2A jedoch einer polygonalen Form, konkret einer Sechskant-Form. Zudem ist die axiale Erstreckung des Verdrehsicherungsmerkmals 40 größer als für die blütenartige Form der Fig. 1A bekannt. Das Fixierelement 16 weist eine entsprechend angepasste Aussparung bzw. Ausnehmung 58 für die gezeigt Sechskant-Form auf. Die in einen Kabelschuh 42 durch die Sechskant-Verdrehsicherung 40 eingeprägte Negativform 56 illustriert die Wirksamkeit auch dieser Ausführungsform. Die ursprünglich kreisrunde Öffnung des Kabelschuhs 42 weist nun durch die Kanten der Sechskant-Form des Verdrehsicherungsmerkmals 40 erzeugte axiale Vertiefung oder Rillen auf.

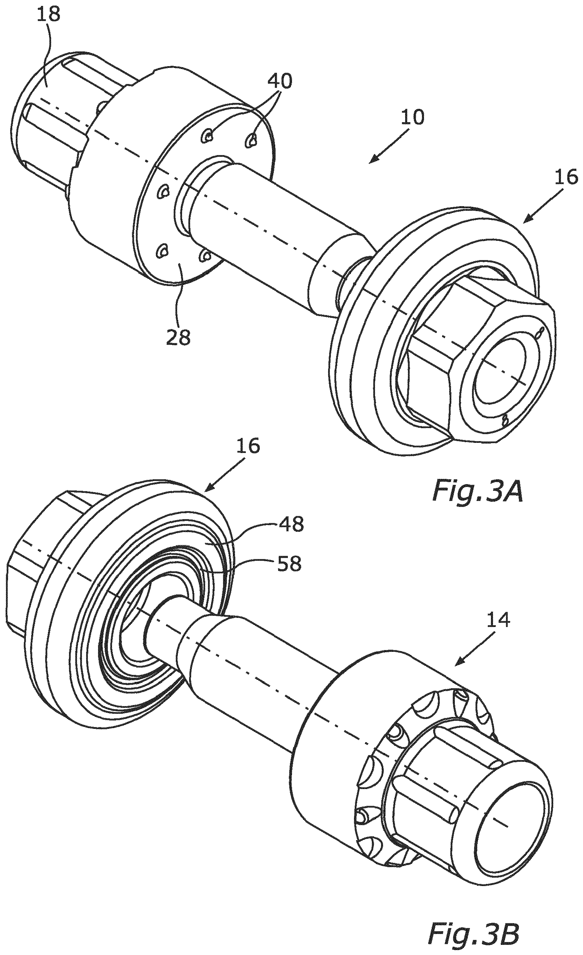

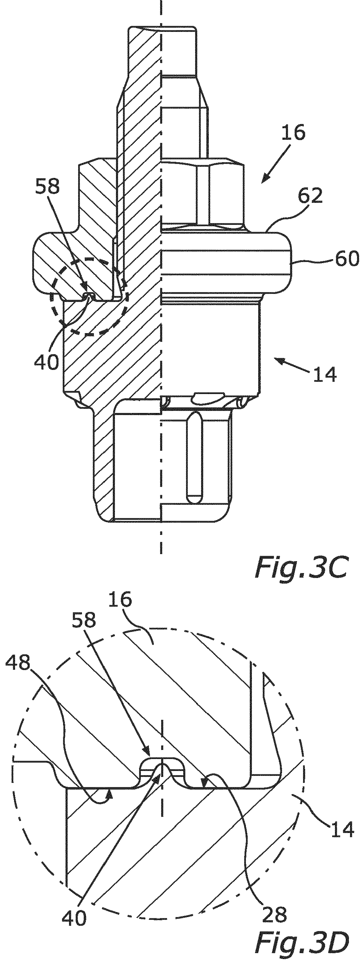

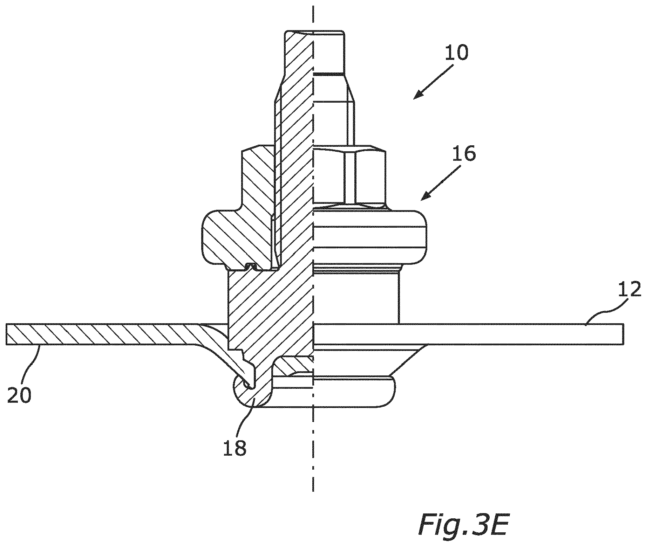

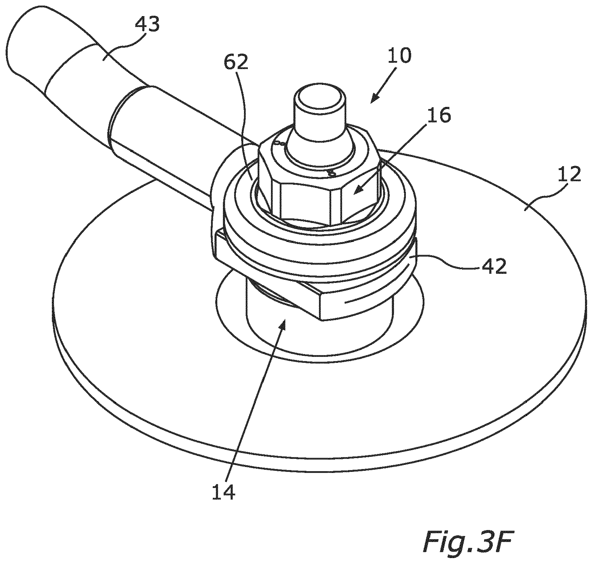

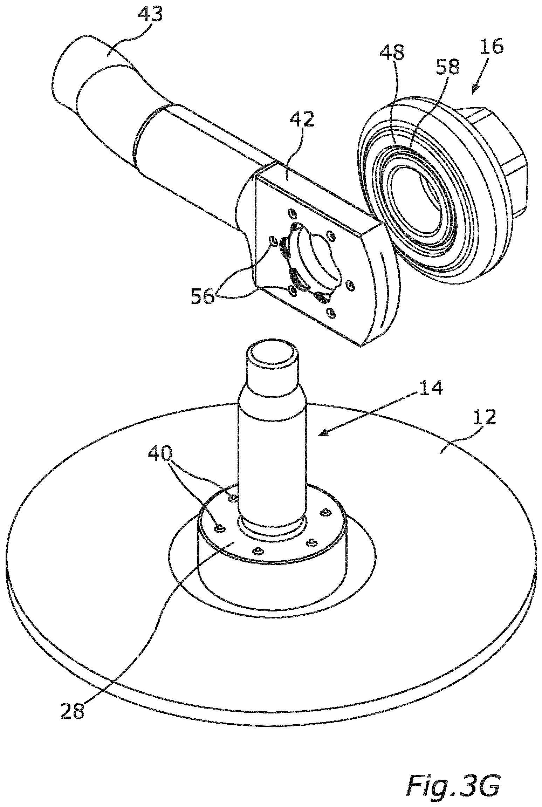

Fig. 3A bis 3G zeigen ein Bolzenelement mit einer Verdrehsicherung, für welche mehrere Verdrehsicherungsmerkmale 40, konkret mehrere Spikes, vorgesehen sind, die auf der Kopfteilauflagefläche 28 ringförmig in Umfangsrichtung konzentrisch mit dem Funktionsabschnitt 26 angeordnet sind. Die zugehörige Fixiermutter 16 weist eine entsprechend komplementäre Ausnehmung 58 auf, welche geeigneterweise als ringförmig umlaufende Nut in der Fixierelementauflagefläche 48 ausgebildet ist, welche an der radialen Position des Spike-Verdrehsicherungsmerkmals angeordnet ist. Durch die umlaufende Nut in der Fixierelementauflagefläche 48 kann das Fixierelement 16 auf den Funktionsabschnitt 26 aufgeschraubt werden, ohne das Verdrehsicherungsmerkmal 40 zu beschädigen. Die Spikes 40 erzeugen beim Befestigen des Kabelschuhs 42 die Negativformen 56.

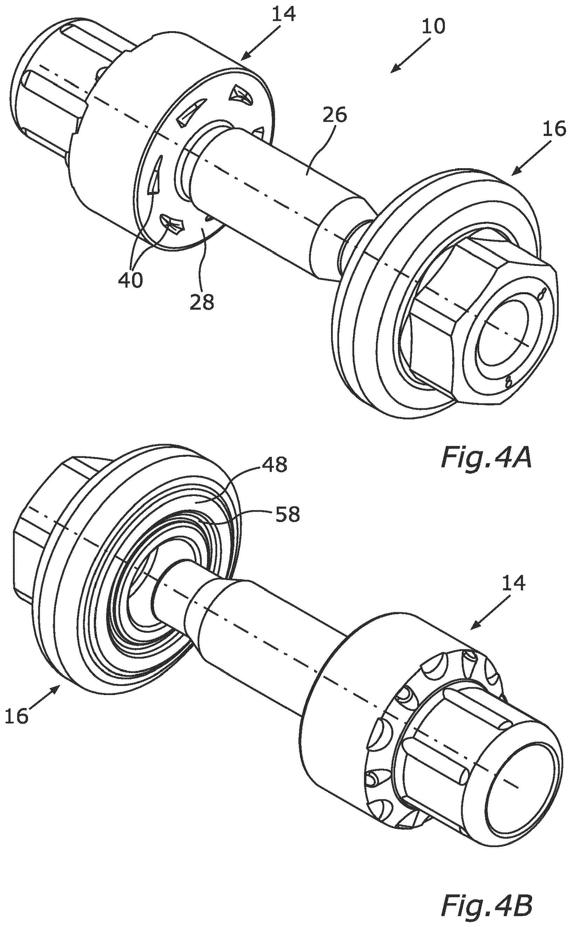

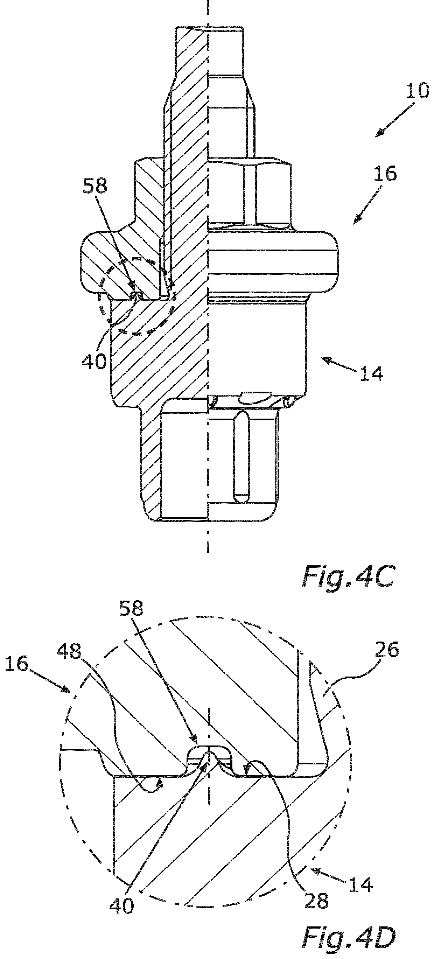

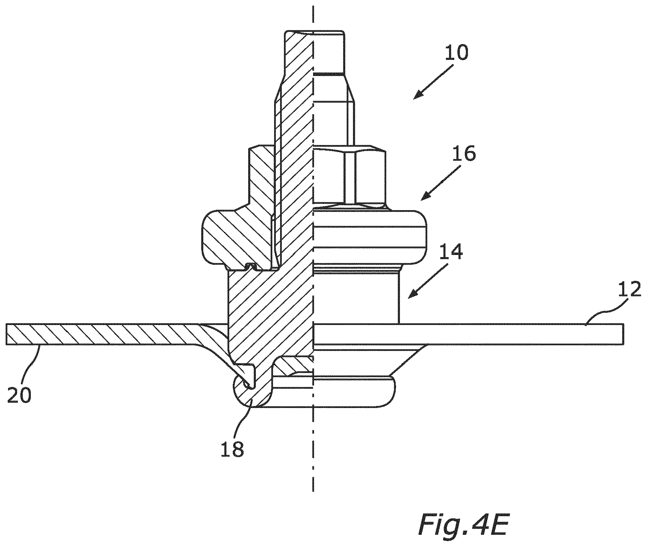

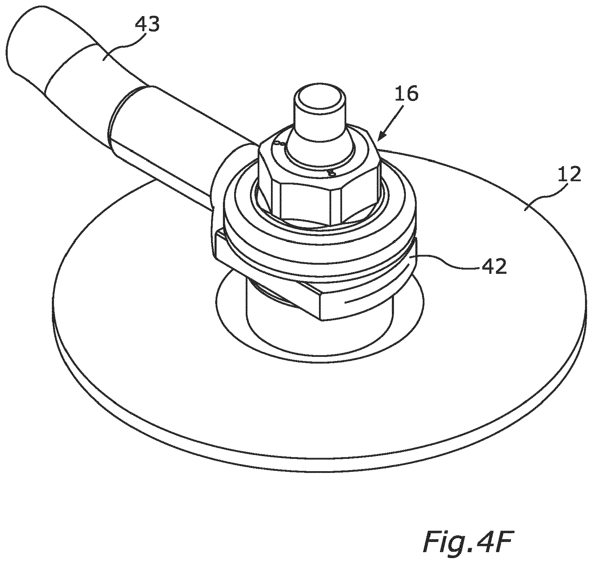

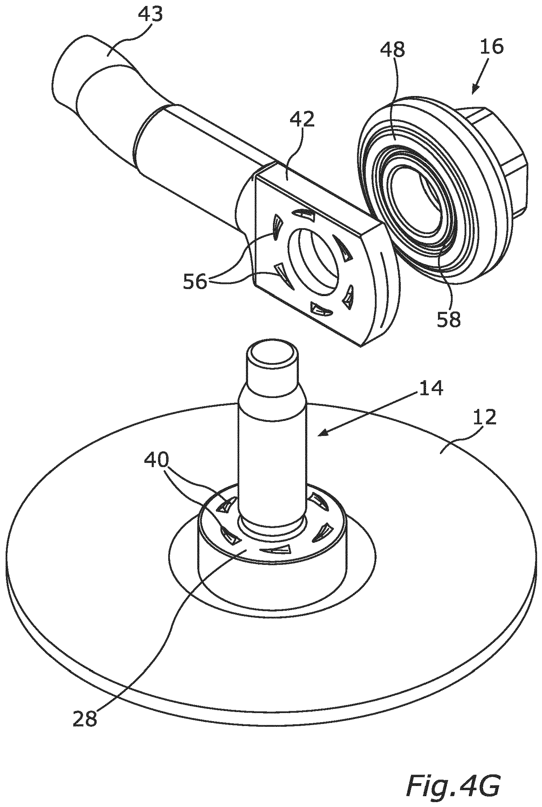

Die Ausführungsform der Fig. 4A bis 4G ist den Fig. 3A bis 3G in weiten Teilen sehr ähnlich. Anstelle einzelner Spikes sind die Verdrehsicherungsmerkmale 40 hier jedoch als keilförmige Dorne ausgebildet, welche beim Festziehen der Fixiermutter 16 mit ihrer verbreiterten Flanke voran in den Kabelschuh 42 gedrängt werden. Auf diese Weise wird ein verbesserter Eingriff zwischen Kabelschuh 42 und Verdrehsicherungsmerkmal 40 angestrebt.

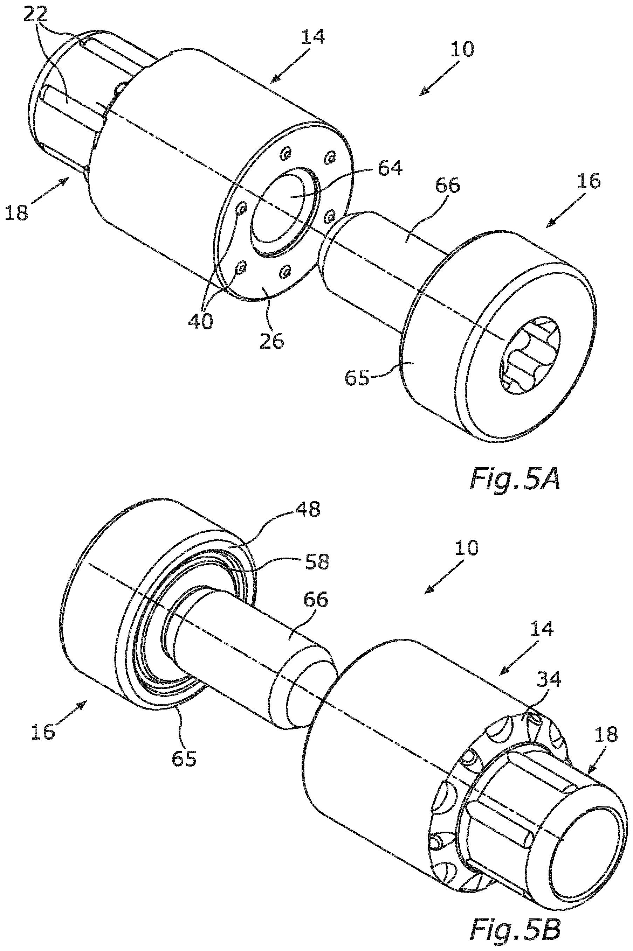

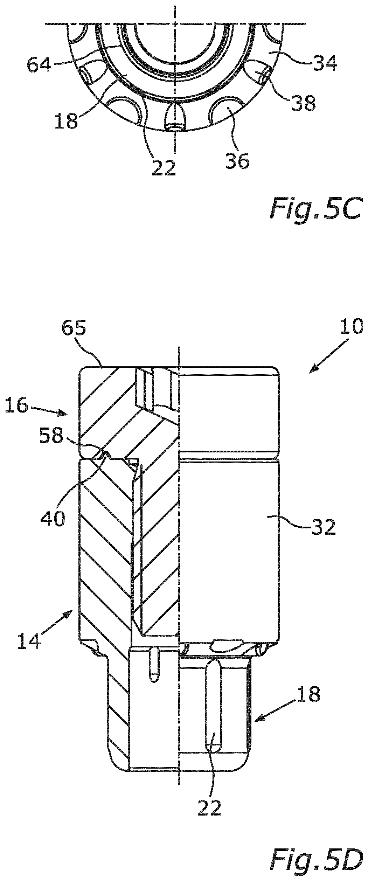

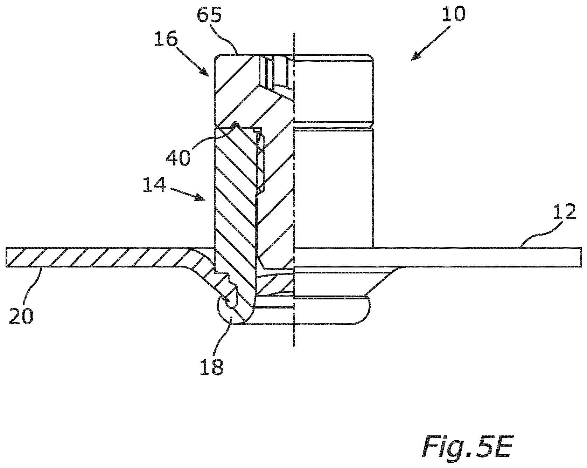

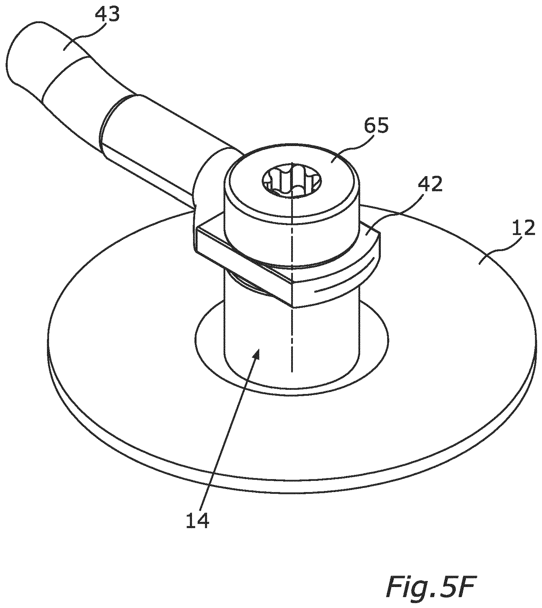

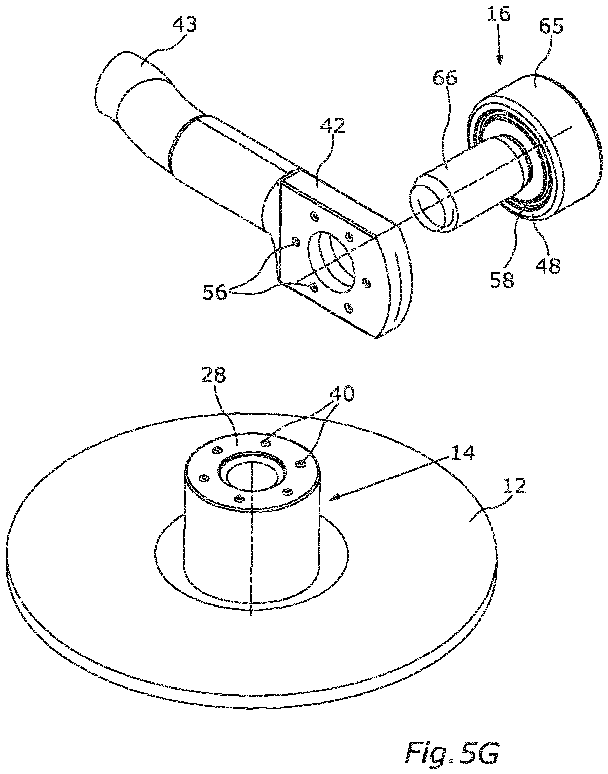

In den Fig. 5A bis 5G ist schließlich eine Ausführungsform der Funktionseinheit 10 gezeigt, die anstelle eines Bolzenelements als Befestigungselement 14 ein Mutterelement aufweist, der Funktionsabschnitt 26 des Mutterelements umfasst anstelle des Schaftabschnitts 25 ein in dem Kopfteil angeordnetes Innengewinde 64, das sich von der Kopfteilauflagefläche 28 in Richtung des Befestigungsabschnitts 18 erstreckt.

Als Fixierelement 16 ist eine Schraube vorgesehen, die ein Außengewinde 66 aufweist, das mit dem Innengewinde 64 des Mutterelements korrespondiert. Abgesehen von der "Umkehr" der Gewindereihenfolge in Bezug auf Befestigungselement 14 und Fixierelement 16 bleiben die weiteren Eigenschaften und die Funktionsweise der Funktionseinheit 10 weiterhin gültig. Die Fixierelementanlagefläche 48 und eine entsprechende Ausnehmung für das Verdrehsicherungsmerkmal 40 sind auf dem Schraubenkopf angeordnet.

Ein Kabelschuh 42 wird an dem Mutterelement 14 befestigt, indem er auf die Kopfteilauflagefläche aufgelegt und anschließend mittels des Außengewindes 66 der Schraube 65 klemmend zwischen Kopfteilauflagefläche 28 und Fixierelementauflagefläche 48 fixiert wird.

Abschließend sei zu bemerken, dass das Befestigungselement 14 in jedem Fall auch einen selbststanzenden Befestigungsabschnitt 18 aufweisen kann, der in das Werkstück 12 eingebracht werden kann, ohne vorher ein Loch darin vorzufertigen.

### Bezugszeichenliste

- 10: Funktionseinheit
- 12: Werkstück
- 14: Befestigungselement
- 16: Fixierelement
- 18: Befestigungsabschnitt
- 20: Unterseite des Werkstücks 12
- 22: rippenförmige Erhebungen des Befestigungsabschnitts 18
- 24: Kopfteil
- 25: Schaftteil
- 26: Funktionsabschnitt
- 28: Kopfteilauflagefläche
- 30: Außengewinde des Schaftteils 25
- 32: Außenkontur des Kopfteils 24
- 34: Werkstückanlagefläche
- 36: Vertiefungen der Werkstückanlagefläche 34
- 38: Erhebungen der Werkstückanlagefläche 34
- 40: Verdrehsicherungsmerkmal
- 42: Kabelschuh
- 43: Kabel
- 44: axiale Durchgangsöffnung des Fixierelements 16
- 46: erste Stirnfläche
- 48: Fixierelementauflagefläche
- 50: Innengewinde des Fixierelements 16
- 52: sechskantförmige Außenkontur
- 54: Öffnung des Kabelschuhs 42
- 56: Negativ des Verdrehsicherungsmerkmals 40
- 58: Ausnehmung der Fixierelementauflagefläche 48
- 60: Flansch des Fixierelements 16
- 62: ringförmige Fläche des Flansches 60
- 64: Innengewinde des Mutterelements
- 65: Schraube
- 66: Außengewinde der Schraube 65

- L: Längsachse
- S: Stempelrichtung

## Patentansprüche

1. Funktionseinheit (10) zur Anbringung an einem Werkstück (12), insbesondere Blechteil, umfassend:
ein Befestigungselement (14) mit einem Befestigungsabschnitt (18), insbesondere mit einem selbststanzenden Befestigungsabschnitt (18), zur drehfesten Befestigung der Funktionseinheit (10) an dem Werkstück (12) und mit einem sich in einer axialen Richtung an den Befestigungsabschnitt (18) anschließenden Kopfteil (24), welcher einen Funktionsabschnitt (26) und eine dem Befestigungsabschnitt (18) abgewandte Kopfteilauflagefläche (28) aufweist, und
ein Fixierelement (16), das mittels einer Drehbewegung an dem Funktionsabschnitt (26) des Kopfteils (24) des Befestigungselements (14) fixierbar ist und das eine Fixierelementauflagefläche (48) aufweist, die in einem an dem Befestigungselement (14) montierten Zustand des Fixierelements (16) der Kopfteilauflagefläche (28) zugewandt ist, derart, dass ein Anbauteil (42) zwischen der Kopfteilauflagefläche (28) und der Fixierelementauflagefläche (48) klemmbar ist,
wobei die Kopfteilauflagefläche (28) zumindest ein aus der Fläche ragendes Verdrehsicherungsmerkmal (40) aufweist, welches dazu ausgebildet ist, das Material des Anbauteils (42) zumindest abschnittsweise zu verformen,
**dadurch gekennzeichnet, dass**
die Fixierelementauflagefläche (48) mindestens eine Vertiefung oder Ausnehmung (58) aufweist, welche dazu ausgebildet ist, in einem an dem Befestigungselement (14) montierten Zustand des Fixierelements (16) das zumindest eine aus der Kopfteilauflagefläche (28) ragende Verdrehsicherungsmerkmal (40) aufzunehmen, während die Fixierelementauflagefläche (48) zumindest abschnittsweise mit der Kopfteilauflagefläche (28) in Kontakt steht, wobei die Vertiefung oder Ausnehmung (58) mindestens eine ringförmige umlaufende Nut umfasst.

2. Funktionseinheit (10) nach Anspruch 1,
wobei die Kopfteilauflagefläche (28) ringförmig ausgestaltet ist.

3. Funktionseinheit (10) nach Anspruch 1 oder 2,
wobei mehrere Verdrehsicherungsmerkmale (40) vorgesehen sind, die in Umfangsrichtung, insbesondere ringförmig, verteilt angeordnet sind.

4. Funktionseinheit (10) nach zumindest einem der vorstehenden Ansprüche, wobei das zumindest eine aus der Kopfteilauflagefläche (28) ragende Verdrehsicherungsmerkmal (40) den Funktionsabschnitt (26) radial außenseitig umgibt, und insbesondere direkt angrenzend an den Funktionsabschnitt (26) ausgebildet ist.

5. Funktionseinheit (10) nach zumindest einem der vorstehenden Ansprüche, wobei der Befestigungsabschnitt (18) einen, insbesondere zylindrischen, umformbaren Nietabschnitt umfasst.

6. Funktionseinheit (10) nach zumindest einem der vorstehenden Ansprüche, wobei das Befestigungselement (14) ein Bolzenelement ist, dessen Funktionsabschnitt (26) einen sich in axialer Richtung seitens der Kopfteilauflagefläche (28) anschließenden Schaftteil (25) umfasst.

7. Funktionseinheit (10) nach zumindest einem der Ansprüche 1 bis 5,
wobei das Befestigungselement (14) ein Mutterelement ist, dessen Funktionsabschnitt (26) ein in dem Kopfteil angeordnetes Innengewinde (62) umfasst, insbesondere wobei sich das Innengewinde (62) in axialer Richtung von der Kopfteilauflagefläche (28) in Richtung des Befestigungsabschnitts (18) erstreckt.

8. Funktionseinheit (10) nach zumindest einem der Ansprüche 1 bis 6,
wobei das Fixierelement (16) als Fixiermutter ausgebildet ist, welche eine axiale Durchgangsöffnung (44) aufweist, die sich von einer sich radial erstreckenden ersten Stirnfläche (46) zu der sich radial erstreckenden Fixierelementauflagefläche (48) erstreckt und welche ein Innengewinde (50) aufweist, und wobei das Fixierelement (16) einen sich radial erstreckenden Flansch (60) aufweist, insbesondere wobei die Fixierelementauflagefläche (48) an dem Flansch (60) angeordnet ist.

9. Funktionseinheit (10) nach Anspruch 8,
wobei die Fixiermutter seitens der ersten Stirnfläche (46) eine Angriffsfläche für ein Schraubwerkzeug aufweist, und
wobei der Flansch (60) eine, insbesondere ringförmige, Fläche (62) für einen Stempel eines Setzkopfes aufweist.

10. Zusammenbauteil, umfassend eine Funktionseinheit (10) nach zumindest einem der vorstehenden Ansprüche und ein Werkstück (12),
wobei das Befestigungselement (14) der Funktionseinheit (10) an dem Werkstück (12) formschlüssig durch ein Umformverfahren angebracht ist.

11. Zusammenbauteil nach Anspruch 10,
mit einem Anbauteil (42), insbesondere einer Kabelanschlusseinrichtung oder mit einem Kabelschuh, wobei das Anbauteil zwischen der Kopfteilauflagefläche (28) des Befestigungselements (14) und der Fixierelementauflagefläche (48) des Fixierelements (16) geklemmt ist, wobei das Anbauteil (42) mit dem zumindest einen Verdrehsicherungsmerkmal (40) der Kopfteilauflagefläche (28) in Eingriff steht und durch dieses drehfest fixiert ist, insbesondere wobei das Material des zumindest einen Verdrehsicherungsmerkmals (40), insbesondere des Kopfteils (24), des Befestigungselements (14) und/oder des Fixierelements (16), eine höhere Festigkeit aufweist, als das des Anbauteils (42).

12. Verfahren zur Herstellung eines Zusammenbauteils nach Anspruch 10 oder 11, bei dem
ein Befestigungselement (14) einer Funktionseinheit (10) nach zumindest einem der Ansprüche 1 bis 9 mit Hilfe eines Stempels einer Setzvorrichtung in ein Werkstück (12) eingepresst oder eingestanzt wird, während das Fixierelement (16) der Funktionseinheit (10) demontiert ist,
wobei der Stempel eine Kontaktfläche aufweist, die zur Übertragung einer Einpresskraft auf das Befestigungselement (14) zumindest abschnittsweise mit der Kopfteilauflagefläche (28) des Befestigungselements (14) in Eingriff gebracht wird,
wobei die Kontaktfläche des Stempels mindestens eine Vertiefung oder Ausnehmung (58), insbesondere mit einer Drehsymmetrie oder Rotationssymmetrie, aufweist, in welcher das zumindest eine aus der Kopfteilauflagefläche (28) ragende Verdrehsicherungsmerkmal (40) während des Einpressens oder Einstanzens aufgenommen wird.

13. Verfahren zur Herstellung eines Zusammenbauteils nach Anspruch 10 oder 11, bei dem
ein Befestigungselement (14) einer Funktionseinheit (10) nach zumindest einem der Ansprüche 1 bis 9, jedoch ohne Verdrehsicherungmerkmal (40) auf der Kopfteilauflagefläche (28), mit Hilfe eines Stempels einer Setzvorrichtung in ein Werkstück (12) eingepresst wird, während das Fixierelement (16) der Funktionseinheit (10) demontiert ist,
wobei der Stempel eine Kontaktfläche aufweist, die zur Übertragung einer Einpresskraft auf das Befestigungselement (14) mit der Kopfteilauflagefläche (28) des Befestigungselements (14) in Eingriff gebracht wird,
wobei die Kontaktfläche des Stempels Ausnehmungen (58) aufweist, welche als Negativform für zumindest ein Verdrehsicherungsmerkmal (40) dienen, und in welche während des Anpressens der Kontaktfläche an die Kopfteilauflagefläche (28) Material der Kopfteilauflagefläche (28) einfließt, sodass während des Einpressens zumindest ein Verdrehsicherungsmerkmal (40) auf der Kopfteilauflagefläche (28) ausgebildet wird.

14. Verfahren zur Herstellung eines Zusammenbauteils nach Anspruch 10 oder 11, bei dem
ein Befestigungselement (14) einer Funktionseinheit (10) nach Anspruch 1 mit Hilfe eines Stempels einer Setzvorrichtung in ein Werkstück (12) eingepresst wird, während das Fixierelement (16) der Funktionseinheit (10) an dem Befestigungselement (14) derart montiert ist, dass das zumindest eine aus der Kopfteilauflagefläche (28) ragende Verdrehsicherungsmerkmal (40) in der mindestens einen Vertiefung oder Ausnehmung (58) der Fixierelementauflagefläche (48) aufgenommen ist, während die Fixierelementauflagefläche (48) zumindest abschnittsweise mit der Kopfteilauflagefläche (28) in Kontakt steht,
wobei der Stempel eine Kontaktfläche aufweist, die zur indirekten Übertragung einer Einpresskraft oder Einstanzkraft auf das Befestigungselement (14) zumindest abschnittsweise mit dem Fixierelement (16), insbesondere einem Flansch (60) des Fixierelements (16) in Eingriff gebracht wird.

## Claims

1. A functional unit (10) for attachment to a workpiece (12), in particular to a sheet metal part, said functional unit (10) comprising:
a fastening element (14) having a fastening section (18), in particular having a self-piercing fastening section (18), for the rotationally fixed fastening of the functional unit (10) to the workpiece (12) and having a head part (24) which adjoins the fastening section (18) in an axial direction and which has a functional section (26) and a head part support surface (28) remote from the fastening section (18); and
a fixing element (16) which can be fixed to the functional section (26) of the head part (24) of the fastening element (14) by means of a rotational movement and which has a fixing element support surface (48) which, in a state of the fixing element (16) installed at the fastening element (14), faces the head part support surface (28) such that an attachment part (42) can be clamped between the head part support surface (28) and the fixing element support surface (48),
wherein the head part support surface (28) has at least one feature providing security against rotation (40) which projects from the surface and which is configured to at least sectionally deform the material of the attachment part (42),
**characterized in that**
the fixing element support surface (48) has at least one depression or recess (58) which is configured, in a state of the fixing element (16) installed at the fastening element (14), to receive the at least one feature providing security against rotation (40) projecting from the head part support surface (28) while the fixing element support surface (48) is at least sectionally in contact with the head part support surface (28), with the depression or recess (58) comprising at least one ring-shaped peripheral groove.

2. A functional unit (10) according to claim 1,
wherein the head part support surface (28) is designed in ring shape.

3. A functional unit (10) according to claim 1 or 2,
wherein a plurality of features providing security against rotation (40) are provided which are arranged distributed, in particular in a ring shape, in a peripheral direction.

4. A functional unit (10) according to at least one of the preceding claims,
wherein the at least one feature providing security against rotation (40) projecting from the head part support surface (28) surrounds the functional section (26) at a radial outer side and is in particular formed directly adjacent to the functional section (26).

5. A functional unit (10) according to at least one of the preceding claims,
wherein the fastening section (18) comprises a deformable rivet section, in particular a cylindrical deformable rivet section.

6. A functional unit (10) according to at least one of the preceding claims, wherein the fastening element (14) is a bolt element whose functional section (26) comprises a shaft part (25) adjoining the head part support surface (28) at the side thereof in the axial direction.

7. A functional unit (10) according to at least one of the claims 1 to 5,
wherein the fastening element (14) is a nut element whose functional section (26) comprises an internal thread (62) arranged in the head part, in particular wherein the internal thread (62) extends in the axial direction from the head part support surface (28) in the direction of the fastening section (18).

8. A functional unit (10) according to at least one of the claims 1 to 6,
wherein the fixing element (16) is configured as a fixing nut that has an axial passage opening (44), which extends from a radially extending first end face (46) to the radially extending fixing element support surface (48), and that has an internal thread (50), and wherein the fixing element (16) has a radially extending flange (60), in particular wherein the fixing element support surface (48) is arranged at the flange (60).

9. A functional unit (10) according to claim 8,
wherein the fixing nut has an engagement surface for a screwing tool at the side of the first end face (46), and
wherein the flange (60) has a surface (62), in particular a ring-shaped surface (62), for a punch of a setting head.

10. A component assembly, comprising a functional unit (10) according to at least one of the preceding claims; and a tool (12),
wherein the fastening element (14) of the functional unit (10) is attached in a form-fitted manner to the workpiece (12) by a shaping process.

11. A component assembly according to claim 10,
comprising an attachment part (42), in particular a cable connection device or a cable lug, wherein the attachment part is clamped between the head part support surface (28) of the fastening element (14) and the fixing element support surface (48) of the fixing element (16), wherein the attachment part (42) is in engagement with the at least one feature providing security against rotation (40) of the head part support surface (28) and is rotationally fixedly secured by it, in particular wherein the material of the at least one feature providing security against rotation (40), in particular of the head part (24), of the fastening element (14) and/or of the fixing element (16), has a higher strength than that of the attachment part (42).

12. A method of manufacturing a component assembly according to claim 10 or 11, in which
a fastening element (14) of a functional unit (10) according to at least one of the claims 1 to 9 is pressed into or punched into a workpiece (12) by means of a punch of a setting apparatus while the fixing element (16) of the functional unit (10) is dismantled,
wherein the punch has a contact surface which is at least sectionally brought into engagement with the head part support surface (28) of the fastening element (14) to transmit a press-in force to the fastening element (14),
wherein the contact surface of the punch has at least one depression or recess (58), in particular having a rotational symmetry or rotation symmetry, in which the at least one feature providing security against rotation (40) projecting from the head part support surface (28) is received during the pressing in or punching in.

13. A method of manufacturing a component assembly according to claim 10 or 11, in which
a fastening element (14) of a functional unit (10) according to at least one of the claims 1 to 9, but without a feature providing security against rotation (40) on the head part support surface (28), is pressed into a workpiece (12) by means of a punch of a setting apparatus while the fixing element (16) of the functional unit (10) is dismantled,
wherein the punch has a contact surface which is brought into engagement with the head part support surface (28) of the fastening element (14) to transmit a press-in force to the fastening element (14),
wherein the contact surface of the punch has recesses (58) which serve as a negative mold for at least one feature providing security against rotation (40) and into which material of the head part support surface (28) flows during the pressing of the contact surface onto the head part support surface (28) such that at least one feature providing security against rotation (40) is formed on the head part support surface (28) during the pressing in.

14. A method of manufacturing a component assembly according to claim 10 or 11, in which
a fastening element (14) of a functional unit (10) according to claim 1 is pressed into a workpiece (12) by means of a punch of a setting apparatus while the fixing element (16) of the functional unit (10) is installed at the fastening element (14) such that the at least one feature providing security against rotation (40) projecting from the head part support surface (28) is received in the at least one depression or recess (58) of the fixing element support surface (48) while the fixing element support surface (48) is at least sectionally in contact with the head part support surface (28),
wherein the punch has a contact surface which is at least sectionally brought into engagement with the fixing element (16), in particular with a flange (60) of the fixing element (16), for an indirect transmission of a press-in force or punch-in force to the fastening element (14).

## Revendications

1. Unité fonctionnelle (10) destinée à être montée sur une pièce à oeuvrer (12), en particulier sur une pièce en tôle, comprenant :
un élément de fixation (14) ayant une portion de fixation (18), en particulier une portion de fixation auto-poinçonneuse (18), pour la fixation solidaire en rotation de l'unité fonctionnelle (10) à la pièce à oeuvrer (12), et ayant une partie de tête (24) qui se raccorde à la portion de fixation (18) dans une direction axiale et qui présente une portion fonctionnelle (26) et une surface d'appui de partie de tête (28) détournée de la portion de fixation (18), et
un élément d'attache (16) qui peut être attaché à la portion fonctionnelle (26) de la partie de tête (24) de l'élément de fixation (14) par un mouvement de rotation et qui présente une surface d'appui d'élément d'attache (48) qui, dans un état monté de l'élément d'attache (16) sur l'élément de fixation (14), est tournée vers la surface d'appui de partie de tête (28), de telle sorte qu'une pièce rapportée (42) puisse être serrée entre la surface d'appui de partie de tête (28) et la surface d'appui d'élément d'attache (48),
la surface d'appui de partie de tête (28) présentant au moins une caractéristique anti-rotation (40) dépassant de la surface, laquelle est conçue pour déformer au moins localement le matériau de la pièce rapportée (42),
**caractérisée en ce que**
la surface d'appui d'élément d'attache (48) présente au moins un renfoncement ou un évidement (58) qui est conçu pour recevoir, dans un état monté de l'élément d'attache (16) sur l'élément de fixation (14), ladite au moins une caractéristique anti-rotation (40) dépassant de la surface d'appui de partie de tête (28), alors que la surface d'appui d'élément d'attache (48) est au moins localement en contact avec la surface d'appui de partie de tête (28), le renfoncement ou l'évidement (58) présentant au moins une rainure périphérique annulaire.

2. Unité fonctionnelle (10) selon la revendication 1,
dans laquelle la surface d'appui de partie de tête (28) est de forme annulaire.

3. Unité fonctionnelle (10) selon la revendication 1 ou 2,
dans laquelle sont prévues plusieurs caractéristiques anti-rotation (40) qui sont réparties dans la direction périphérique, en particulier de manière annulaire.

4. Unité fonctionnelle (10) selon l'une au moins des revendications précédentes,
dans laquelle ladite au moins une caractéristique anti-rotation (40) dépassant de la surface d'appui de partie de tête (28) entoure la portion fonctionnelle (26) radialement vers l'extérieur et est en particulier réalisée directement adjacente à la portion fonctionnelle (26).

5. Unité fonctionnelle (10) selon l'une au moins des revendications précédentes,
dans laquelle la portion de fixation (18) présente une portion formant rivet déformable, en particulier cylindrique.

6. Unité fonctionnelle (10) selon l'une au moins des revendications précédentes,
dans laquelle l'élément de fixation (14) est un élément de type boulon dont la portion fonctionnelle (26) comprend une partie de tige (25) se raccordant dans la direction axiale du côté de la surface d'appui de partie de tête (28).

7. Unité fonctionnelle (10) selon l'une au moins des revendications 1 à 5,
dans laquelle l'élément de fixation (14) est un élément formant écrou dont la portion fonctionnelle (26) présente un taraudage (62) disposé dans la partie de tête, en particulier, le taraudage (62) s'étendant dans la direction axiale depuis la surface d'appui de partie de tête (28) en direction de la portion de fixation (18).

8. Unité fonctionnelle (10) selon l'une au moins des revendications 1 à 6,
dans laquelle l'élément d'attache (16) est réalisé sous forme d'écrou d'attache qui présente une ouverture traversante axiale (44) qui s'étend depuis une première surface frontale (46) s'étendant radialement jusqu'à la surface d'appui d'élément d'attache (48) s'étendant radialement et qui présente un filetage (50), et
l'élément d'attache (16) présente une bride (60) s'étendant radialement, en particulier, la surface d'appui d'élément d'attache (48) étant disposée sur la bride (60).

9. Unité fonctionnelle (10) selon la revendication 8,
dans laquelle l'écrou d'attache présente, du côté de la première surface frontale (46), une surface d'attaque pour un outil de vissage, et
la bride (60) présente une surface (62), en particulier annulaire, pour un poinçon d'une tête de pose.

10. Pièce d'assemblage, comprenant une unité fonctionnelle (10) selon l'une au moins des revendications précédentes et une pièce à oeuvrer (12),
dans laquelle l'élément de fixation (14) de l'unité fonctionnelle (10) est monté par complémentarité de forme sur la pièce à oeuvrer (12) par un procédé de formage.

11. Pièce d'assemblage selon la revendication 10,
comprenant une pièce rapportée (42), en particulier un organe de raccordement de câble, ou comprenant une cosse de câble, la pièce rapportée étant serrée entre la surface d'appui de partie de tête (28) de l'élément de fixation (14) et la surface d'appui d'élément d'attache (48) de l'élément d'attache (16), la pièce rapportée (42) étant en prise avec ladite au moins une caractéristique anti-rotation (40) de la surface d'appui de partie de tête (28) et étant attachée solidairement en rotation par celle-ci, en particulier le matériau de ladite au moins une caractéristique anti-rotation (40), en particulier de la partie de tête (24), de l'élément de fixation (14) et/ou de l'élément d'attache (16), présentant une résistance supérieure à celle du matériau de la pièce rapportée (42).

12. Procédé de fabrication d'une pièce d'assemblage selon la revendication 10 ou 11, dans lequel
un élément de fixation (14) d'une unité fonctionnelle (10) selon l'une au moins des revendications 1 à 9 est enfoncé ou poinçonné dans une pièce à oeuvrer (12) à l'aide d'un poinçon d'un dispositif de pose, alors que l'élément d'attache (16) de l'unité fonctionnelle (10) est démonté,
le poinçon présente une surface de contact qui, pour transmettre une force d'enfoncement à l'élément de fixation (14), est mise en prise au moins localement avec la surface d'appui de partie de tête (28) de l'élément de fixation (14),
la surface de contact du poinçon présente au moins un renfoncement ou un évidement (58), en particulier avec une symétrie de rotation ou une symétrie de révolution, dans lequel ladite au moins une caractéristique anti-rotation (40) dépassant de la surface d'appui de partie de tête (28) est reçue pendant l'enfoncement ou le poinçonnage.

13. Procédé de fabrication d'une pièce d'assemblage selon la revendication 10 ou 11, dans lequel
un élément de fixation (14) d'une unité fonctionnelle (10) selon l'une au moins des revendications 1 à 9, mais sans caractéristique anti-rotation (40) sur la surface d'appui de partie de tête (28), est enfoncé dans une pièce à oeuvrer (12) à l'aide d'un poinçon d'un dispositif de pose, alors que l'élément d'attache (16) de l'unité fonctionnelle (10) est démonté,
le poinçon présente une surface de contact qui, pour transmettre une force d'enfoncement à l'élément de fixation (14), est mise en prise avec la surface d'appui de partie de tête (28) de l'élément de fixation (14),
la surface de contact du poinçon présente des évidements (58) qui servent de profil négatif pour au moins une caractéristique anti-rotation (40), et dans lesquels s'écoule du matériau de la surface d'appui de partie de tête (28), pendant le pressage de la surface de contact contre la surface d'appui de partie de tête (28), de sorte que, pendant l'enfoncement, au moins une caractéristique anti-rotation (40) est formée sur la surface d'appui de partie de tête (28).

14. Procédé de fabrication d'une pièce d'assemblage selon la revendication 10 ou 11, dans lequel
un élément de fixation (14) d'une unité fonctionnelle (10) selon la revendication 1 est enfoncé dans une pièce à oeuvrer (12) à l'aide d'un poinçon d'un dispositif de pose, alors que l'élément d'attache (16) de l'unité fonctionnelle (10) est monté sur l'élément de fixation (14) de telle sorte que ladite au moins une caractéristique anti-rotation (40) dépassant de la surface d'appui de partie de tête (28) est reçue dans ledit au moins un renfoncement ou évidement (58) de la surface d'appui d'élément d'attache (48), alors que la surface d'appui d'élément d'attache (48) est au moins localement en contact avec la surface d'appui de partie de tête (28),
le poinçon présente une surface de contact qui, pour transmettre indirectement une force d'enfoncement ou une force de poinçonnage à l'élément de fixation (14), est au moins localement mise en prise avec l'élément d'attache (16), en particulier avec une bride (60) de l'élément d'attache (16).
